# EUROPÄISCHE PATENTSCHRIFT

(11) **EP 3 536 634 B1**
(45) Veröffentlichungstag und Bekanntmachung des Hinweises auf die Patenterteilung: **28.04.2021**
(21) Anmeldenummer: 18161056.9
(22) Anmeldetag: 09.03.2018
(51) Int. Cl.: B65D 83/54, G01F 11/02

(54) **SPENDER ZUM AUSTRAG VON FLÜSSIGKEITEN UND BETRIEBSVERFAHREN HIERZU**
DISPENSER FOR DISCHARGING LIQUIDS AND METHOD OF OPERATION
DISTRIBUTEUR DESTINÉ À LA DISTRIBUTION DE LIQUIDES ET PROCÉDÉ DE FONCTIONNEMENT CORRESPONDANT

(43) Veröffentlichungstag der Anmeldung: 11.09.2019
(73) Patentinhaber: Aptar Radolfzell GmbH, 78315 Radolfzell (DE)
(72) Erfinder: Schmid, Felix, 78337 Öhningen (DE)
(74) Vertreter: Patentanwaltskanzlei Cartagena

(56) Entgegenhaltungen:
- EP-A1- 0 125 970
- EP-A2- 2 253 560
- DE-A1- 2 920 497
- FR-A- 1 461 685
- FR-A1- 2 591 331

## Beschreibung

### ANWENDUNGSGEBIET UND STAND DER TECHNIK

Aus dem Stand der Technik sind Spender für Flüssigkeiten aus verschiedenen Bereichen bekannt. Solche Spender weisen einen Flüssigkeitsspeicher auf, innerhalb dessen eine Flüssigkeit vor dem Austrag gelagert wird, sowie eine Austragöffnung, durch die hindurch Flüssigkeit abgegeben werden kann. Gattungsgemäße Spender weisen weiterhin eine Dosiereinrichtung auf, die es gestattet, mit einer Betätigungsbewegung eine stets etwa gleichbleibende Flüssigkeitsmenge auszutragen.

Unter einer Flüssigkeit im Sinne der Erfindung werden sowohl Flüssigkeiten geringer Viskosität ähnlich Wasser als auch höherviskose creme- oder gelartige Flüssigkeiten verstanden.

Gattungsgemäße wie auch erfindungsgemäße Flüssigkeitsspender können zum Austrag pharmazeutischer Flüssigkeiten verwendet werden, die bestimmungsgemäß insbesondere auf der Haut des Benutzers oder in Augen, Mund oder Nase appliziert werden. Sie können auch für kosmetische Flüssigkeiten verwendet werden, die insbesondere auf der Haut oder in das Haar eines Benutzers abgegeben werden. Weiterhin können gattungsgemäße wie auch erfindungsgemäße Spender zur dosierten Abgabe von Lebensmittel vorgesehen sein, wie beispielsweise Ketchup oder Mayonnaise. Auch technische Flüssigkeiten wie Maschinenöle, Lacke oder anderweitige Beschichtungsmaterialen können mit gattungsgemäßen und mit erfindungsgemäßen Spendern ausgetragen werden.

Aus der EP 2 253 560 A2 geht ein Abgabeventil zur dosierten Abgabe von Flüssigkeiten hervor, welches über einen niederdrückbaren Schaft und einen Ventilkolben verfügt, wobei zwischen dem Schaft und dem Ventilkolben eine Feder vorgesehen ist. Wird der Schaft niedergedrückt, so wird diese Feder gespannt, da die Flüssigkeit erst verzögert nach Öffnen eines Auslasskanals ausgetragen wird. Sobald der Auslasskanal geöffnet ist, drückt die Feder den Kolben hinunter und trägt dabei Flüssigkeit durch den Auslasskanal aus.

Im Kontext der vorliegenden Erfindung verwandte Dokumente sind beispielsweise die US 2017/0021993 A1, die US 2017/0008692 A1, die US 9527658 B2, die WO 2016/198257 A1, die EP 0109361 A1, die DE 2920497 A1, die FR 1461685 A1 und die US 3858771 A.

### AUFGABE UND LÖSUNG

Aufgabe der Erfindung ist es, einen Spender zur Verfügung zu stellen, der auf baulich einfache Art und Weise eine reproduzierbare Dosierung gestattet, wobei diese Dosierung vorzugsweise auch unter einem permanent anliegenden Flüssigkeitsdruck im Flüssigkeitsspeicher möglich sein soll.

Erfindungsgemäß werden zur Lösung dieser Aufgabe ein Spender und ein Betriebsverfahren für einen Spender vorgeschlagen.

Ein erfindungsgemäßer Spender verfügt entsprechend gattungsgemäßer Spender über einen Flüssigkeitsspeicher zur Lagerung der Flüssigkeit vor dem Austrag sowie über eine Austragöffnung, durch die die Flüssigkeit in eine Umgebung abgegeben werden kann. Er verfügt weiterhin über eine Dosiereinrichtung zur Abgabe einer definierten Flüssigkeitsmenge in Reaktion auf eine Betätigung des Spenders. Die Dosiereinrichtung ist zwischen dem Flüssigkeitsspeicher und der Austragöffnung vorgesehen und dafür ausgebildet, reproduzierbar übereinstimmende Flüssigkeitsmengen aus dem Flüssigkeitsspeicher auszutragen.

Erfindungsgemäß ist die Dosiereinrichtung hierfür folgendermaßen gestaltet: Die Dosiereinrichtung verfügt über eine Vordosierkammer, die über einen Zufuhrkanal zumindest zeitweise mit dem Flüssigkeitsspeicher verbunden ist, sowie über eine Hauptdosierkammer, die über einen Zwischenkanal zumindest zeitweise mit der Vordosierkammer verbunden ist und über einen Austragkanal mit der Austragöffnung verbunden ist.

In der Vordosierkammer wird Flüssigkeit, die zuvor aus dem Flüssigkeitsspeicher in die Vordosierkammer geleitet wurde, vom Flüssigkeitsspeicher isoliert, wobei eine hierfür nutzbare Ventilanordnung vorgesehen sein kann, wie im Weiteren noch erläutert wird. Aus der Vordosierkammer wird die Flüssigkeit durch den Zwischenkanal in die Hauptdosierkammer weitergefördert und dort bezüglich des Flüssigkeitsaustausches von der Vordosierkammer und dem Flüssigkeitsspeicher isoliert. Auch hierfür kann eine Ventilanordnung vorgesehen sein, die im Weiteren noch erläutert wird.

Die Vordosierkammer und die Hauptdosierkammer weisen erfindungsgemäß jeweils eine verlagerbare Wandung auf, durch deren Verlagerung das jeweilige Kammervolumen veränderbar ist, wobei die verlagerbare Wandungen der Vordosierkammer und der Hauptdosierkammer derart miteinander wirkgekoppelt sind, dass eine Volumenvergrößerung der Vordosierkammer eine Volumenverkleinerung der Hauptdosierkammer verursacht.

Bei einem erfindungsgemäßen Spender sind somit zwei Kammern, die Vordosierkammer und die Hauptdosierkammer, zwischen dem Flüssigkeitsspeicher und der Austragöffnung vorgesehen. Diese sind zumindest zeitweise derart miteinander verbunden, dass in einer Phase der Nutzung Flüssigkeit aus dem Flüssigkeitsspeicher in die Vordosierkammer strömen kann und in einer zweiten Phase der Nutzung Flüssigkeit aus der Vordosierkammer in die Hauptdosierkammer strömen kann. Wie im Weiteren noch erläutert wird, kann die jeweilige Steuerung der Phasen über Ventile erfolgen, die druckabhängig und/oder durch eine Betätigungshandhabe geschaltet öffnen und schließen können.

Durch die Wirkkoppelung der verlagerbaren Wandungen bedingen sich die Volumen der Vordosierkammer und der Hauptdosierkammer. Wird die Vordosierkammer durch Verlagerung ihrer verlagerbaren Wandung vergrößert, so führt dies zu einer Verringerung des Volumens der Hauptdosierkammer. Erfindungsgemäß wird dieser Zusammenhang genutzt, um aus der Hauptdosierkammer Flüssigkeit durch die Austragöffnung hindurch austragen zu können, indem eine Vergrößerung der Vordosierkammer bei darin einströmender Flüssigkeit und eine Verkleinerung der Hauptdosierkammer und damit ein Austrag stattfinden.

Der Zufuhrkanal, der den Flüssigkeitsspeicher mit der Vordosierkammer verbindet und der Zwischenkanal, der die Vordosierkammer mit der Hauptdosierkammer verbindet, können abschnittsweise gemeinsam ausgeführt sein.

Ein erfindungsgemäßer Spender ist üblicherweise als tragbarer Spender ausgebildet und verfügt daher vorzugsweise über einen Flüssigkeitsspeicher mit einem maximalen Flüssigkeitsvolumen von bis zu 1000 ml, vorzugsweise von bis zu 500 ml, insbesondere vorzugsweise von bis zu 250 ml.

Die Anwendungsfelder für einen erfindungsgemäßen Spender sind vielfältig. As besonders vorteilhaft wird die Verwendung im pharmazeutischen und kosmetischen Bereich angesehen. Im pharmazeutischen Bereich handelt es sich vorzugsweise um einen Spender zur Abgabe von Flüssigkeit auf der Haut eines Benutzers oder in dessen Augen, Nase oder Mund, so dass der Spender hierfür mit einem entsprechend angepassten Applikator versehen sein kann und mit einer pharmazeutischen Flüssigkeit befüllt sein kann. Im kosmetischen Bereich ist ein erfindungsgemäßer Spender insbesondere für die Abgabe von Gels und Lotionen auf die Haut sinnvoll verwendbar und in diesem Falle vorzugsweise mit einer kosmetischen Flüssigkeit, insbesondere einem kosmetisch wirkenden Gel oder einer kosmetisch wirkenden Lotion, befüllt.

Neben der pharmazeutischen oder kosmetischen Verwendung wird auch die Verwendung für Lebensmittel und eine entsprechende Befüllung des Flüssigkeitsspeichers mit Ketchup, Mayonnaise, Speiseöl, Saucen oder Dressing erfindungsgemäß vorgeschlagen. Im Bereich technischer Flüssigkeiten werden insbesondere die Verwendung mit Lacken und anderen Beschichtungsmaterialien sowie Ölen sowie eine entsprechende Befüllung des Flüssigkeitsspeichers vorgeschlagen.

Die jeweils mittels der Dosiereinrichtung zu dosierende Flüssigkeitsmenge hängt naturgemäß erheblich mit dem Anwendungsgebiet zusammen. Die zu dosierende Flüssigkeitsmenge der Dosiereinrichtung, die bauartbedingt von derVerlagerbarkeit der verlagerbaren Wandung der Hauptdosierkammer abhängt, beträgt vorzugsweise je nach Anwendungszweck zwischen 0,01 ml und 5 ml. Für viele Anwendungen wird ein Austragvolumen zwischen 0,1 ml und 3 ml, insbesondere zwischen 1 ml und 2 ml, als zweckmäßig angesehen.

Vorzugsweise ist eine Federeinrichtung vorgesehen, durch die die wirkgekoppelten verlagerbaren Wandungen derVordosierkammer und der Hauptdosierkammer permanent in Wirkungsrichtung einer Volumenverkleinerung der Vordosierkammer und einer Volumenvergrößerung der Hauptdosierkammer kraftbeaufschlagt sind.

Die genannte Federeinrichtung dient als Rückstellmittel. Eine Verlagerung der verlagerbaren Wandungen der Dosierkammern dahingehend, dass die Hauptdosierkammer verkleinert und die Vordosierkammer vergrößert wird, erfolgt in der beschriebenen Weise dadurch, dass Flüssigkeit in die Vordosierkammer strömt und unter dem beim Einströmen anliegenden Flüssigkeitsdruck die verlagerbaren Wandungen verlagert. Die beschriebene Federeinrichtung dient als Rückstellmittel, um die Wandungen der Dosierkammern derart zu verlagern, dass die Vordosierkammer volumetrisch verkleinert und die Hauptdosierkammer volumetrisch vergrößert wird. Die Federeinrichtung sollte dabei derart auf den Förderdruck beim Befüllen der Vordosierkammer abgestimmt sein, dass sie durch diesen Förderdruck komprimiert werden kann und einer Vergrößerung der Vordosierkammer somit nicht entgegensteht.

Die Federeinrichtung erfüllt insbesondere vorzugsweise den Zweck, bei befüllter Vordosierkammer nach Isolation der Vordosierkammer vom Flüssigkeitsspeicher die Flüssigkeit aus der Vordosierkammer hinaus- und in die Hauptdosierkammer hineinzupumpen. Sie wirkt somit insbesondere vorzugsweise gleichsam zweifach. Durch die Vergrößerung der Hauptdosierkammer schafft sie im Falle einer Gestaltung der Austragöffnung mit einem Auslassventil einen Unterdruck und in der Vordosierkammer einen Überdruck, so dass die Flüssigkeit durch den Zwischenkanal von der Vordosierkammer in die Hauptdosierkammerströmen kann.

Im Zwischenkanal ist ein Zwischenventil vorgesehen, welches im geschlossenen Zustand das Einströmen von Flüssigkeit aus der Vordosierkammer in die Hauptdosierkammer verhindert und im offenen Zustand ermöglicht.

Das Zwischenventil dient dem Zweck, in geöffnetem Zustand ein Umpumpen der Flüssigkeit aus der Vordosierkammer in die Hauptdosierkammer zu gestatten, jedoch bei Befüllung der Vordosierkammer und/oder während des Austrags zu verhindern, dass Flüssigkeit aus dem Flüssigkeitsspeicher direkt und unter Umgehung der Vordosierkammer in die Hauptdosierkammer strömt bzw. aus der Hauptdosierkammer nicht in Richtung der Austragöffnung, sondern in Richtung der Vordosierkammer abgegeben wird. Bei nicht betätigter Betätigungshandhabe ist das Ventil vorzugsweise geöffnet und wird erst durch Betätigen der Betätigungshandhabe geschlossen.

Ebenso ist im Zufuhrkanal ein Zufuhrventil vorgesehen, welches im geschlossenen Zustand das Einströmen von Flüssigkeit aus dem Flüssigkeitsspeicher in die Vordosierkammer verhindert und im offenen Zustand ermöglicht.

Das Zufuhrventil dient dem Zweck, die Vordosierkammer gegenüber dem Flüssigkeitsspeicher zu isolieren, so dass zum einen ein gegebenenfalls im Flüssigkeitsspeicher herrschender Flüssigkeitsdruck nicht in einem unbenutzten Ruhezustand des Spenders auf die Flüssigkeit in der Vordosierkammer und der Hauptdosierkammer wirken kann. Zum anderen ist diese Isolation gegenüber dem Flüssigkeitsspeicher von Vorteil, um Flüssigkeit aus der Vordosierkammer in die Hauptdosierkammer fördern zu können, ohne dass diese in den Flüssigkeitsspeicher zurückströmt.

Das Zufuhrventil ist vorzugsweise federbelastet und wird insbesondere vorzugsweise durch eine hierfür vorgesehene integrale Federeinrichtung permanent in Richtung seines geschlossenen Zustandes gedrückt. Es bedarf also einer gegen diese Federeinrichtung wirkenden Betätigungskraft, um es zu öffnen.

Der Spender verfügt vorzugsweise über eine Betätigungshandhabe, die zur Steuerung des Zufuhrventils und/oder des Zwischenventils mit mindestens einem dieser Ventile wirkverbunden ist. Die Betätigungshandhabe wirkt vorzugsweise auf mechanischem Wege auf das Zufuhrventil bzw. das Zwischenventil, so dass die Steuerung des jeweiligen Ventils ungeachtet eines im Spender bestehenden Flüssigkeitsdrucks ermöglicht ist.

Die Betätigungshandhabe wirkt insbesondere vorzugsweise auf das Zwischenventil in unmittelbarer mechanischer Weise. Insbesondere vorzugsweise wird das Zwischenventil durch Betätigen der Betätigungshandhabe, also üblicherweise durch Niederdrücken der Betätigungshandhabe, geschlossen. Das Zwischenventil verfügt insbesondere über einen Ventilsitz und einen Ventilkörper, wobei eines dieser beiden Elemente ortsfest zur Betätigungshandhabe ausgebildet sein kann. Bevorzugt ist jedoch eine Gestaltung, bei der ein Ventilkörper getrennt von der Betätigungshandhabe beweglich ist, jedoch mittels der Betätigungshandhabe in eine Schließposition gedrückt werden kann, in der er am Ventilsitz anliegt und dadurch den Zwischenkanal verschließt.

Durch Koppelung mit dem Zufuhrventil kann die Betätigungshandhabe steuern, ob Flüssigkeit aus dem Flüssigkeitsspeicher unter Druck in die Vordosierkammer gefördert wird und hierdurch mittelbar auch die Flüssigkeit in der Hauptdosierkammer druckbeaufschlagt wird.

Vorzugsweise ist eine gemeinsame Betätigungshandhabe am Spender vorgesehen, die zur Steuerung des Zufuhrventils und des Zwischenventils mit beiden Ventilen wirkverbunden ist, so dass mittels nur einer Betätigungshandhabe beide Ventile in unterschiedlichen Phasen der Nutzung des Spenders geöffnet bzw. geschlossen werden können. Alternativ kann auch eine mechanische Kopplung der genannten Ventile vorgesehen sein, bei der diese nicht in mechanischer Hinsicht durch eine Betätigungshandhabe geschaltet werden, sondern in Reaktion auf eine andere Zustandsänderung schalten, beispielsweise in Reaktion auf einen steigenden Druck im Flüssigkeitsspeicher.

Bei einer bevorzugten Gestaltung ist vorgesehen, dass die Wirkverbindungen zwischen der gemeinsamen Betätigungshandhabe einerseits und dem Zufuhrventil und dem Zwischenventil andererseits derart beschaffen ist, dass durch Betätigung der gemeinsamen Betätigungshandhabe das Zwischenventil geschlossen und das Zufuhrventil geöffnet wird.

Die Betätigungshandhabe ist demnach gemäß dieser Weiterbildung dafür ausgebildet, aus einem Ausgangszustand, in dem das Zufuhrventil geschlossen und das Zwischenventil geöffnet ist, einen zweiten Zustand der Dosiereinrichtung herzustellen, in der das Zwischenventil geschlossen und das Zufuhrventil geöffnet ist. In diesem zweiten Zustand kann Flüssigkeit aus dem Flüssigkeitsspeicher unter Druck in die Vordosierkammer gelangen, wird durch das Zwischenventil jedoch davon abgehalten, unmittelbar in die Hauptdosierkammer und/oderzurAustragöffnungzu strömen.

Vorzugsweise ist dabei die Wirkverbindung zwischen der gemeinsamen Betätigungshandhabe oder einem anderen auslösenden Zustand wie einer Druckerhöhung im Flüssigkeitsspeicher einerseits und dem Zufuhrventil und dem Zwischenventil andererseits derart beschaffen, dass durch Betätigung der gemeinsamen Betätigungshandhabe zunächst das Zwischenventil geschlossen wird und durch anschließend, insbesondere durch fortgesetzte Betätigung der gemeinsamen Betätigungshandhabe, das Zufuhrventil geöffnet wird.

Die genannte Wirkverbindung ist also dafür ausgebildet, eine Art Verzögerung zu bewirken. Das Zwischenventil ist somit bereits geschlossen, wenn das Zufuhrventil geöffnet wird. Eine Möglichkeit hierfür liegt darin, beide Ventile, das Zufuhrventil und das Zwischenventil, in verschiedenen Betätigungsstellungen der Betätigungshandhabe zu schließen bzw. zu öffnen. Von besonderem Vorteil ist eine Gestaltung, bei der baulich ein Kausalzusammenhang geschaffen ist, der ein Öffnen des Zufuhrventils bei geöffnetem Zwischenventil unmöglich macht. Dies ist beispielsweise dadurch erzielbar, dass der Kraftfluss zwischen der Betätigungshandhabe und dem Zufuhrventil derart durch das Zwischenventil verläuft, dass dieses nur bei Anliegen seines Ventilkörpers am Ventilsitz des Zwischenventils und somit bei geschlossenen Zwischenventil den entsprechenden Kraftfluss schaffen kann.

Eine Möglichkeit zur Erzielung einer solchen Sequenz sieht vor, dass das Zwischenventil einen Ventilsitz und einem demgegenüber beweglichen Ventilkörper aufweist, wobei zur Steuerung dieses Ventilkörpers mittels der gemeinsamen Betätigungshandhabe ein fest mit der gemeinsamen Betätigungshandhabe verbundener erster Steuerabschnitt vorgesehen ist, der bei Betätigung der Betätigungshandhabe den Ventilkörper gegen den Ventilsitz presst, wobei der Ventilkörper separat vom ersten Steuerabschnitt ausgebildet sein kann oder auch ortsfest oder auch einstückig zu diesem ersten Steuerabschnitt vorgesehen sein kann.

Zusätzlich kann ein zweiter Steuerabschnitt zur Betätigung des Zufuhrventils vorgesehen sein, wobei dieser zweite Steuerabschnitt vorzugsweise ortsfest zum Ventilsitz des Zwischenventils angeordnet ist, so dass nach Schließen des Zwischenventils der zweite Steuerabschnitt über die gemeinsame Betätigungshandhabe zum Öffnen des Zufuhrventils verlagerbar ist.

Im einfachsten Falle werden die verlagerbaren Wandungen der Vordosierkammer und der Hauptdosierkammer durch eine verformbare Membran gebildet, deren eine Seite die Vordosierkammer begrenzt und deren andere Seite die Hauptdosierkammer begrenzt.

Vorzugsweise handelt es sich jedoch bei den verlagerbaren Wandungen der Vordosierkammer und der Hauptdosierkammer um verschiebliche Wandungen, die in sich im Wesentlichen starr sind. Diese können mittels eines Getriebes verbunden sein, so dass die Bewegung einer der Wandungen nur bei gleichzeitiger Bewegung der anderen Wandung möglich ist.

Insbesondere können die beiden Wandungen hier ortsfest zueinander ausgebildet sein und durch eine gemeinsame Wandungseinheit gebildet sein, die in Art eines Kolbens verschiebbar ausgebildet ist. Diese Bauweise ist besonders einfach. Beide verlagerbaren Wandungen werden durch nur ein Bauteil zur Verfügung gestellt. Alternative Bauweisen sehen jedoch vor, dass die Wandungen an getrennten Bauteilen vorgesehen sind und wirkverbunden in unterschiedlichem Maße verlagert werden, beispielsweise durch das genannte zwischengeschaltete Getriebe. Insbesondere, wenn es gewünscht ist, die Druckbeaufschlagung der Flüssigkeit in der Hauptdosierkammer mit einem anderen Druck vorzunehmen als jenem im Flüssigkeitsspeicher und der Vordosierkammer, ist ein solches Getriebe eine zweckmäßige Realisierungsmöglichkeit.

Aufgrund der einfachen Bauweise wird jedoch bevorzugt, dass ein zumindest im Wesentlichen identischer Druck in der Vordosierkammer und der Hauptdosierkammer durch eine gemeinsame Wandungseinheit geschaffen wird.

Hierbei ist es besonders bevorzugt, wenn die verlagerbare Wandungen der Vordosierkammer und der Hauptdosierkammer eine identische Größe bezogen auf die Bewegungsrichtung aufweisen, so dass eine Volumenverkleinerung der Vordosierkammer durch Verlagerung der Wandungseinheit eine Volumenvergrößerung der Hauptdosierkammer in gleichem Maße verursacht. Durch die identische Größe ist der Flüssigkeitsdruck bei geschlossenem Zwischenventil auf beiden Seiten, also in der Vordosierkammer und der Hauptdosierkammer, im Wesentlichen identisch. Lediglich die bereits genannte Federeinrichtung kann dazu führen, dass der sich in der Hauptdosierkammer einstellende Flüssigkeitsdruck etwas geringer als der Druck in derVordosierkammer ist.

Alternativ können jedoch auch Gestaltungen vorgesehen sein, bei denen die verlagerbaren Wandungen unterschiedliche Größen aufweisen, was zu einer besonderen Charakteristik beim Flüssigkeits-übertrag aus der Vordosierkammer in die Hauptdosierkammer führt, wie im Weiteren noch erläutert ist.

So kann die verlagerbare Wandung der Vordosierkammer größer oder kleiner als die verlagerbare Wandung der Hauptdosierkammer sein, so dass eine Volumenverkleinerung der Vordosierkammer durch Verlagerung der Wandungseinheit eine Volumenvergrößerung der Hauptdosierkammer in geringerem oder höherem Maße verursacht.

Unterschiedliche Größen der verlagerbaren Wandung meinen in diesem Kontext die bezüglich der Druckerzeugung wirksamen Flächenabschnitte der jeweiligen verlagerbaren Wandung. Durch die unterschiedliche Größe können verschiedene Wirkungen erzielt werden, die fallweise gewünscht sein können. So kann insbesondere eine besondere Druckwirkung erzielt werden, bei der der Druck in der Hauptdosierkammer deutlich höher oder geringer als jener in der Vordosierkammer sein kann. Hierüber lässt sich beispielsweise ein besonders druckloser Flüssigkeitsaustrag oder ein durch besonders hohen Druck erzeugbares Sprühbild herstellen. Weiterhin kann hierdurch auch eine Rücksaugung von Flüssigkeit aus dem Austragkanal in die Hauptdosierkammer bewirkt werden, indem bei Verlagerung der verlagerbaren Wandungen die Volumenzunahme in der Hauptdosierkammer größer als die Volumenabnahme in der Vordosierkammer ist.

Die beschriebene erfindungsgemäße Gestaltung sieht vor, dass Flüssigkeit aus dem Flüssigkeitsspeicher unter Druck in die Vordosierkammer gefördert wird und durch die wechselwirkenden Wandungen hierdurch das Volumen der Hauptdosierkammer verringert und ein Austrag von Flüssigkeit verursacht wird.

Zur Erzeugung des Drucks zur Befüllung der Vordosierkammer und zur Verringerung des Volumens der Hauptdosierkammer verfügt der Spender als Flüssigkeitsspeicher vorzugsweise über einen Druckspeicher, der dafür ausgebildet ist, Flüssigkeit unter Überdruck zu speichern.

Ein solcher Druckspeicher führt dazu, dass die Flüssigkeit im Flüssigkeitsspeicher permanent und bereits im Lieferzustand an den Endkunden unter Druck steht. Dies ist beispielsweise durch eine permanent gespannte Federeinrichtung im Druckspeicher möglich, die auf einen Druckbeaufschlagungskolben wirkt. Andere Gestaltungen sehen das Vorhandensein von Treibgas im Flüssigkeitsspeicher vor. Auch möglich sind Gestaltungen mit einem Flüssigkeitsbeutel innerhalb des Druckspeichers, der von einer unter Überdruck stehenden Gasatmosphäre umgeben ist.

Alternativ sind auch anderweitige Gestaltungen möglich, bei denen der Spender über eine Druckbeaufschlagungseinrichtung verfügt, mittels derer Flüssigkeit aus dem Flüssigkeitsspeicher zum Zwecke der Zuführung in die Vordosierkammer fallweise druckbeaufschlagbar ist.

Eine solche Gestaltung könnte beispielsweise eine Pumpeinrichtung umfassen, mittels derer ein nicht zur langfristigen Druckbeaufschlagung vorgesehener Flüssigkeitsspeicher vorbereitend für einen nachfolgenden Austrag druckbeaufschlagt wird.

Grundsätzlich auch möglich ist die Koppelung einer Pumpeinrichtung zur Förderung von Flüssigkeit aus dem Flüssigkeitsspeicher in die Vordosierkammer mit der bereits genannten Betätigungshandhabe. Diese könnte somit zunächst die Druckbeaufschlagung von Flüssigkeit aus dem Flüssigkeitsspeicher bewirken und anschließend gegebenenfalls auf das Zwischenventil oder das Zufuhrventil und das Zwischenventil wirken. Auch eine Gestaltung, bei der die Druckbeaufschlagung des Flüssigkeitsspeichers manuell stattfindet, beispielsweise in Art einer Tube, und bei der gegebenenfalls die Steuerung der genannten Ventile, also des Zwischenventils und des Zufuhrventils mittelbar durch diese Druckbeaufschlagung des Flüssigkeitsspeichers erfolgt, ist denkbar.

Vorzugsweise verfügt der Spender über eine modulare Bauweise mit einer Speichereinheit und einem daran angekoppelten Austragkopf. Die Speichereinheit umfasst dabei den Flüssigkeitsspeicher sowie einen Auslass zur Abgabe der Flüssigkeit in Richtung des Austragkopfes. Der Austragkopf vereint die Vordosierkammer, die Hauptdosierkammer und die Austragöffnung in sich.

Im Falle einer Gestaltung mit einem Zufuhrventil im Zufuhrkanal zwischen Flüssigkeitsspeicher und Vordosierkammer ist dieses Zufuhrventil vorzugsweise Teil der Speichereinheit.

Derartige Speichereinheiten, die einen Druckspeicher und ein Ventil umfassen, sind beispielsweise aus dem Bereich der Deodorants hinlänglich bekannt. Der Austragkopf mit Dosiereinrichtung erfindungsgemäßer Art könnte also mit einem handelsüblichen Druckspeicher mit einem solchen Ventil gekoppelt werden und hierdurch diesen um eine Dosiereinrichtung ergänzen. Das druckspeicherseitige Ventil bildet dann das Zufuhrventil im oben beschriebenen Sinne.

Bei einer besonders vorteilhaften Gestaltung untergliedert sich der Austragkopf in eine Adaptereinheit und eine Austrageinheit. Die Adaptereinheit weist die Befestigungseinrichtung zur Befestigung an der Speichereinheit auf. Die Austrageinheit weist die Austragöffnung auf. Die Adaptereinheit und die Austrageinheit sind auf einfache Weise zusammengesteckt, wobei auch der Austragkanal von der Hauptdosierkammer zur Austragöffnung geschaffen wird. Insbesondere kann eine rein kraftschlüssig haltende Steckverbindung zwischen Adaptereinheit und Austrageinheit vorgesehen sein, aber auch Gestaltungen mit einer formschlüssig haltenden Steckverbindung, die beispielsweise mit Rastnasen auf Seiten der Adaptereinheit oder der Austrageinheit realisiert sein kann, sind möglich.

Bei einersolchen Gestaltung mit Adaptereinheit und Austrageinheit wird ein hohes Maß an Variabilität gewährleistet. Vorzugsweise ist die Austrageinheit mit oder ohne Adaptereinheit mit der Speichereinheit verbindbar, so dass auf Herstellerseite oder auf Kundenseite eine Anpassung an konkrete Bedürfnisse erfolgen kann. Die Austrageinheit ist mit der Adaptereinheit durch eine einfache Verbindung verbunden, die ohne weitere Demontage der Austrageinheit oder der Adaptereinheit möglich ist. Insbesondere kann es sich um eine rein kraftschlüssig haltende Steckverbindung handeln, wie sie bei Austragköpfen für Druckspeicher bereits üblich ist. Auch eine Gestaltung mit durch Aufstecken der Adaptereinheit erzielbarer Verrastung kann vorteilhaft sein.

Die Speichereinheit weist vorzugsweise einen Deckel, insbesondere einen metallischen Deckel, auf, der den Flüssigkeitsspeicher in Richtung des Austragkopfes verschließt. Dieser Deckel ist vom Zufuhrkanal durchdrungen und verfügt über einen vertieften Bereich. Die Vordosierkammer und/oder die Hauptdosierkammer können durch eine außenseitig die jeweilige Kammer umgebende Außenwand und eine Stirnwand begrenzt sein, wobei die Außenwand und die Stirnwand durch zwei unterschiedliche Teile gebildet werden, die miteinander rastend verbunden sind. In einem solchen Fall ist es von Vorteil, wenn die Außenwand und/oder ein außenseitig der Außenwand angeordnetes Sicherungselement in den vertieften Bereich des Deckels hineinragen, so dass eine mechanische Trennung der Außenwand und der Stirnwand voneinander unter Wirkung des Drucks in der Vordosierkammer bzw. Hauptdosierkammer durch eine umlaufende Sicherungswand des Deckels unterbunden ist.

Der genannte Deckel der Speichereinheit ist in ähnlicher Weise schon von bekannten Speichereinheiten bekannt. Üblicherweise handelt es sich um einen metallischen Deckel, der auf der im Wesentlichen zylindrischen Mantelwandung des Druckspeichers durch eine Crimpverbindung befestigt wird. Die hier vorgeschlagene Gestaltung sieht vor, dass die von diesem Deckel geschaffene Vertiefung genutzt wird, um formschlüssig zu verhindern, dass die genannte Außenwand und die genannte Stirnwand sich trennen. Die Gefahr einer solchen Trennung ist durch den je nach Ausgestaltung hohen Druck gegeben, mit der die Flüssigkeit aus dem Flüssigkeitsspeicher in die Vordosierkammer strömt.

Es sind sowohl Gestaltungen möglich, bei denen keinerlei weitere Elemente zwischen der Sicherungswand des Deckels und der Außenwand der Vordosierkammer oder Hauptdosierkammer vorhanden sind. Es kann jedoch auch ein dazwischen liegendes Sicherungselement vorgesehen sein. Dies ist insbesondere dann zweckmäßig, wenn die Außenwand und die Stirnwand bestimmungsgemäß bei der Betätigung des Spenders axial verlagert werden, wie im Weiteren noch erläutert ist. Das dazwischen liegende Sicherungselement kann in einem solchen Fall gewährleisten, dass eine Fügestelle zwischen Außenwand und Stirnwand auch dann gesichert wird, wenn die Fügestelle axial aus der Vertiefung des Deckels herausbewegt wurde.

Eine vorteilhafte Gestaltung sieht vor, dass die Vordosierkammer und/oder die Hauptdosierkammer zwei gemeinsame Kammerbauteile begrenzt werden, die in einer axialen Richtung miteinander verbunden sind und die vorzugsweise ortsfest zum zweiten Steuerabschnitt vorgesehen sind.

Als baulich vorteilhaft hat sich neben der oben beschriebenen Gestaltung unter Nutzung des Deckels als Sicherung eine Gestaltung herausgestellt, bei der die Kammerbauteile jeweils einen zylindrischen Außenabschnitt umfassen, wobei die beiden Außenabschnitte überlappend ineinander geschoben sind. Hierdurch wird ein besonders hohes Maß an Stabilität erreicht. Die überlappenden Bereiche von vorzugsweise einigen Millimetern Überlappungslänge sind darüber hinaus gut für die Anordnung von Rastelementen zur Verrastung der Kammerbauteile geeignet.

Weiterhin vorteilhaft ist es, wenn ein Basisgehäuse des Austragkopfes einen der genannten Außenabschnitte derart umgibt, dass eine Aufweitung des Außenabschnittes begrenzt wird, um einer Trennung der Kammerbauteile entgegenzuwirken. Somit kann die vollständige Trennung der Kammerbauteile verhindert werden, Zwar ist eine Leckage möglich, aber eine möglicherweise verletzungsgefährdende vollständige Trennung der Kammerbauteile wird wirksam verhindert.

Der Aufbau eines erfindungsgemäßen Spenders sieht vorzugsweise vor, dass der Austragkopf über ein Basisgehäuse verfügt, welches über die Befestigungseinrichtung ortsfest mit dem Flüssigkeitsspeicher verbunden ist. Der Austragkopf verfügt vorzugsweise über eine linear gegenüber dem genannten Basisgehäuse bewegliche Betätigungseinheit, die die Betätigungshandhabe umfasst, sowie über eine linear gegenüber dem Basisgehäuse und der Betätigungseinheit bewegliche Kammereinheit, die die Außenwandung der Vordosierkammer und/oder der Hauptdosierkammer bildet.

Das genannte Basisgehäuse verbleibt stets ortsfest zum Flüssigkeitsspeicher bzw. zu einem Gehäuse des Flüssigkeitsspeichers. Demgegenüber ist die Betätigungshandhabe verlagerbar, um ein Öffnen und Schließen des Zwischenventils zu ermöglichen und um weiterhin das Zufuhrventil öffnen oder schließen zu können.

Die verlagerbare Ausgestaltung der Kammereinheit ist nicht zwingend, jedoch vorteilhaft. Sie erlaubt es, unmittelbar die Kammereinheit bzw. einen hierzu ortsfesten Betätigungsabschnitt zu nutzen, um das Zufuhrventil zu öffnen bzw. zu schließen. Dies hat den Vorteil, dass im Bereich der Vordosierkammer keinerlei Gleitdichtung zwischen dem Flüssigkeitsspeicher und der Vordosierkammer vorgesehen sein muss, was insbesondere deswegen von Vorteil ist, da hier hohe Drücke herrschen und sich gezeigt hat, dass Gleitdichtungen an dieser Stelle nur aufwendig in ausreichender Sicherheit realisierbar sind.

Nichtsdestotrotz kann bei einer alternativen Gestaltung vorgesehen sein, dass die Kammereinheit ortsfest zum Basisgehäuse vorgesehen ist. Dann aber ist es bei einer Gestaltung, bei der die Betätigungshandhabe das Zwischenventil und das Zufuhrventil schalten soll, erforderlich, dass der entsprechende Betätigungsabschnitt zum Schalten des Zufuhrventils gegenüber der Kammereinheit verlagerbar ist, was mit dem beschriebenen Problem der dort dann erforderlichen Gleitdichtung einhergeht. Wenn jedoch der hierfür erforderliche Aufwand angemessen erscheint oder aufgrund nur geringer Betriebsdrücke des erfindungsgemäßen Spenders unproblematisch ist, so kann auch diese Ausgestaltung zweckmäßig sein.

Der Spender weist bei einer möglichen Ausgestaltung im Austragkanal ein Austragventil auf, welches in Abhängigkeit des Drucks der von der Hauptdosierkammer einströmenden Flüssigkeit öffnet.

Das Austragventil ist vorzugsweise ein druckabhängig schaltendes Ventil, welches bei ausreichendem Druck in der Hauptdosierkammer und damit in einem zur Austragöffnung führenden Austragkanal öffnet. Hierdurch lässt sich eine spezifisch angepasste Austragcharakteristik erzielen, beispielsweise ein bestimmtes Sprühbild. Zudem ist ein solches Ventil zweckmäßig, um die im Austragkanal verbliebene Flüssigkeit gegenüber einer Umgebung zu isolieren und somit Kontaminationen zu verhindern. Des Weiteren ist das Ventil auch von Vorteil, um zum Zwecke des Umpumpens von Flüssigkeit aus der Vordosierkammer in die Hauptdosierkammer die Entstehung eines hierfür vorteilhaften Unterdrucks in der Hauptdosierkammer zu bewirken. Durch das genannte Austragventil wird verhindert, dass dieser Unterdruck durch aus einer Umgebung durch die Austragöffnung einströmende Luft unterbunden wird.

Neben dem Spender selbst betrifft die Erfindung auch ein Betriebsverfahren für einen solchen Spender. Bei diesem Verfahren sind die folgenden Schritte vorgesehen. Zunächst wird die Vordosierkammer durch den Zufuhrkanal mit druckbeaufschlagter Flüssigkeit aus dem Flüssigkeitsspeicher befüllt, wobei sie dabei durch druckbedingte Verlagerung der verlagerbaren Wandung der Vordosierkammer ihr maximales Volumen einnimmt und die Hauptdosierkammer durch hiervon verursachter Verlagerung der verlagerbaren Wandung ihr minimales Volumen einnimmt. Ausgehend von der befüllten Vordosierkammer wird dann die Flüssigkeit aus der Vordosierkammer unter Verlagerung der verlagerbaren Wandung durch den Zwischenkanal in die Hauptdosierkammer gefördert, bis die Hauptdosierkammer ihr maximales Volumen einnimmt und die Vordosierkammer ihr minimales Volumen einnimmt. Im Zuge nochmaliger Befüllung der Vordosierkammer durch den Zufuhrkanal mitdruckbeaufschlagter Flüssigkeit aus dem Flüssigkeitsspeicher werden die verlagerbaren Wandungen der Vordosierkammer und der Hauptdosierkammer dann wiederum verlagert, so dass das Volumen der Hauptdosierkammer verringert wird und die Flüssigkeit aus der Hauptdosierkammer durch die Austragöffnung hindurch ausgetragen wird.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1 zeigt einen erfindungsgemäßen Spender in einer Gesamtdarstellung in geschnittener Ansicht.
Fig. 2A bis 2H zeigen einen Teilbereich des Spenders umfassend den oberen Teil seiner Speichereinheit sowie seinen Austragkopf, wobei verschiedene Stadien bei der Inbetriebnahme des Spenders verdeutlicht werden.
Fig. 3A und 3B verdeutlichen die Funktionsweise des Spenders nach Inbetriebnahme.
Fig. 4 zeigt eine alternative Gestaltung des Austragkopfes.
Fig. 5A und 5B zeigen eine weitere mögliche Gestaltung des Austragkopfes und die Verwendbarkeit von dessen Austrageinheit ohne Adaptereinheit.
Fig. 6 zeigt eine weitere alternative Gestaltung des Austragkopfes.

### DETAILLIERTE BESCHREIBUNG DER AUSFÜHRUNGSBEISPIELE

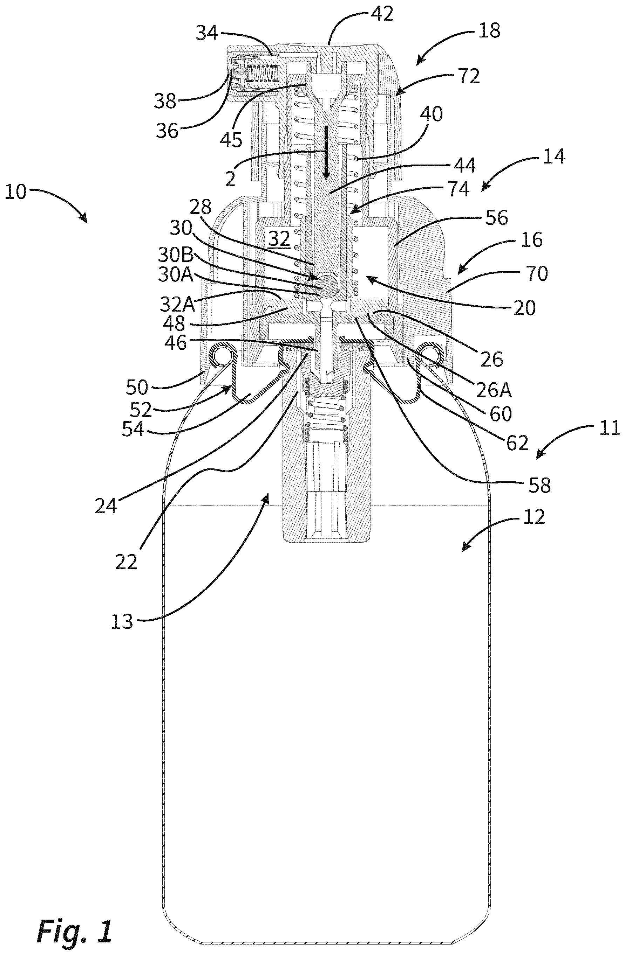

Fig. 1 zeigt einen im Flüssigkeitsspender 10 in geschnittener Gesamtdarstellung.

Der Flüssigkeitsspender 10 verfügt über eine Speichereinheit 11, die einen Flüssigkeitsspeicher 12 mit einer Auslassventilanordnung 13 umfasst. Auf die Speichereinheit 11 ist ein Austragkopf 14 aufgesetzt und mittels einer Befestigungseinrichtung 50 verrastend mit der Speichereinheit 11 verbunden. Dieser Austragkopf 14 verfügt seinerseits über eine Adaptereinheit 16 und eine Austrageinheit 18. An dieser Austrageinheit 18 ist eine Austragöffnung 38 vorgesehen.

Der Austragkopf 14 beinhaltet die überwiegende Zahl von Komponenten einer Dosiereinrichtung 20. Diese Dosiereinrichtung 20 verfügt über eine im Zustand der Fig. 1 maximal verringerte Vordosierkammer 26 und eine Hauptdosierkammer 32. Die Vordosierkammer 26 und die Hauptdosierkammer 32 sind in einer Kammereinheit 74 vorgesehen, die unter anderem eine Außenwand 56 und eine Stirnwand 58 als Außenwandungen der Kammereinheit 74 zur Verfügung stellt. Voneinander getrennt sind die Vordosierkammer 26 und die Hauptdosierkammer 32 durch eine Wandungseinheit 48, die gegenüber der Außenwand 56 und der Stirnwand 58 in vertikaler Richtung kolbenartig verlagerbar ist und dabei eine Vergrößerung derVordosierkammer 26 bei Verkleinerungder Hauptdosierkammer 32 sowie eine Verkleinerung der Vordosierkammer 26 bei Vergrößerung der Hauptdosierkammer 32 gestattet. Diese Wandungseinheit 48 stellt auf Seiten der Hauptdosierkammer 32 eine verlagerbare Wandung 32A und auf Seiten der Vordosierkammer 26 eine verlagerbare Wandung 26A dar. Die Wandungseinheit 48 ist durch eine Federeinrichtung 40, die vorliegend in Form einer Schraubendruckfeder ausgestaltet ist, derart kraftbeaufschlagt, dass sie nach unten und somit in Richtung einer volumetrischen Verringerung der Vordosierkammer 26 wirkt.

Die Vordosierkammer 26 ist mit dem Flüssigkeitsspeicher 12 durch einen Zufuhrkanal 22 verbunden, der sich teilweise innerhalb der Speichereinheit 11 erstreckt und teilweise durch einen hohlen Steuerabschnitt 46 der Kammereinheit 74 gebildet wird. Innerhalb dieses Zufuhrkanals 22 ist ein Zufuhrventil 24 vorgesehen, welches Teil der Ventilanordnung 13 der Speichereinheit 11 ist. Die Vordosierkammer 26 und die Hauptdosierkammer 32 sind durch einen Zwischenkanal 28 miteinander verbunden, wobei auch in diesem Zwischenkanal 28 ein Ventil vorgesehen ist, nämlich das Zwischenventil 30.

Aus der Hauptdosierkammer 32 kann Flüssigkeit in einen Austragkanal 34 strömen, an dessen Ende die Austragöffnung 38 vorgesehen ist. Ein Austragventil 36 im Austragkanal 34 öffnet druckabhängig bei ausreichendem Druck der Flüssigkeit im Austragkanal 34 und in der Hauptdosierkammer 32.

Die bereits genannte Kammereinheit 74 ist in einer Bewegungsrichtung 2 gegenüber dem Flüssigkeitsspeicher 12 und einem Basisgehäuse 70 des Austragkopfes, welches an der Speichereinheit 11 durch die Befestigungseinrichtung 50 rastend angekoppelt ist, beweglich. Gegenüber dem Basisgehäuse 70 und der Kammereinheit 74 ist auch eine Betätigungseinheit 72 in der Bewegungsrichtung 2 beweglich, die zum einen die Austrageinheit 18 mitsamt Austragkanal 34 und Austragöffnung 38 umfasst, die jedoch zusätzlich einen ersten Steuerabschnitt 44 umfasst, der sich in die Kammereinheit 74 und bis zum Zwischenventil 30 erstreckt und außenseitig gegenüber der Kammereinheit 74 im Bereich einer Gleitdichtung 45 abgedichtet ist. An der Oberseite des Austragkopfes 14 ist eine Betätigungshandhabe 42 in Form einer Druckfläche vorgesehen.

Da in der Kammereinheit 74 beim nachfolgend beschriebenen Betrieb ein hoher Druck aufgebaut wird, ist die Kammereinheit 74 dagegen gesichert, dass die Stirnwand 88 unter der Druckwirkung von der zylindrischen Außenwand 56 getrennt wird. Die Sicherung wird dadurch erzielt, dass die Kammereinheit 74 sich bis in den inneren Bereich 54 eines metallischen Deckels 52 der Speichereinheit 11 erstreckt. Die diesen Bereich 54 umgebende Wand 62 des Deckels 52 verhindert mittelbar über die als Sicherungselement 60 dienende Wandung des Basisgehäuses 70 eine radiale Aufweitung der Außenwand 56, die für eine Trennung von der Stirnwand 58 erforderlich wäre.

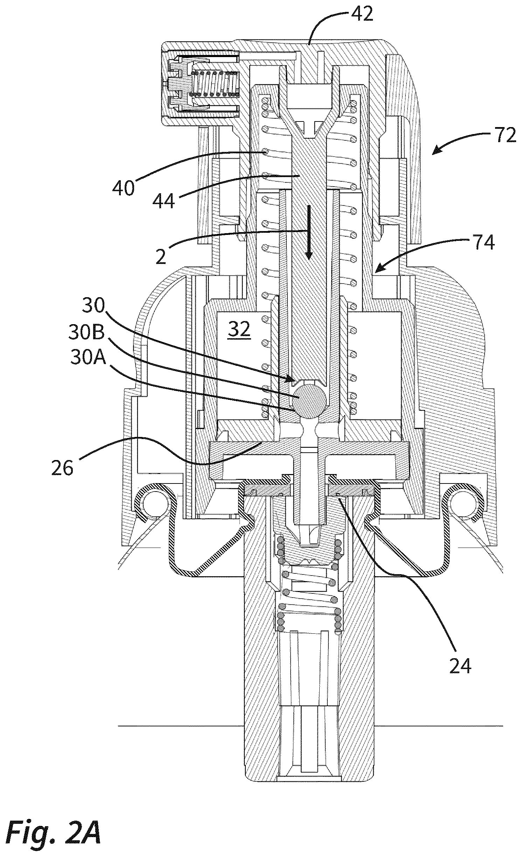

Ausgehend vom Spender 10 im Lieferzustand der Fig. 1 wird die Inbetriebnahme anhand der Fig. 2A bis 2I erläutert.

Fig. 2A zeigt den Zustand entsprechend der Fig. 1. Die Betätigungshandhabe 42 ist in einer oberen Endstellung, die gleichzeitig die Ausgangsstellung darstellt. Das Zwischenventil 30 ist geöffnet, da ein kugelförmiger Ventilkörper 30B sich frei vom Ventilsitz 30A lösen kann, und die Hauptdosierkammer 32 ist somit mit derVordosierkammer 26 verbunden. Das Zufuhrventil 24 ist unter dem Eindruck einer Ventilfeder der Speichereinheit 11 geschlossen. Die Vordosierkammer 26 weist in diesem Zustand ihr minimales Volumen auf. Die Hauptdosierkammer 32 weist ihr maximales Volumen auf.

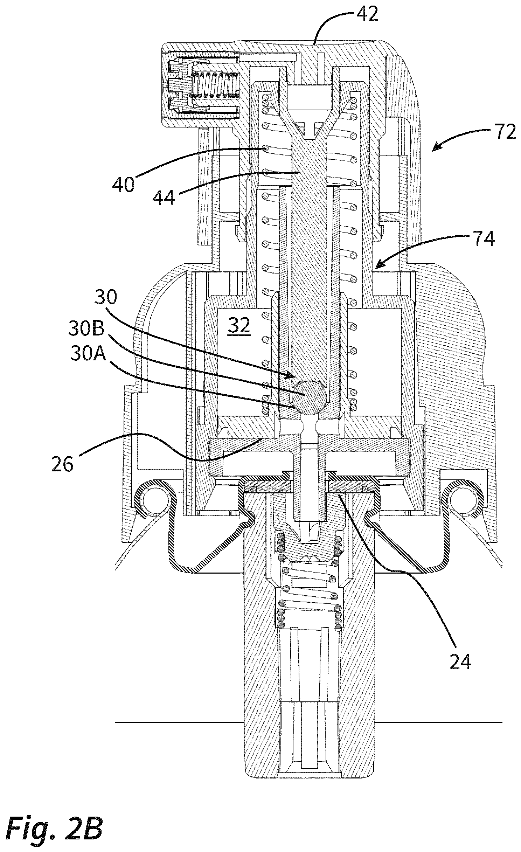

Ausgehend von dieser Ausgangsstellung wird die Betätigungshandhabe 42 mitsamt der gesamten Betätigungseinheit 72 in Bewegungsrichtung 2 niedergedrückt, wodurch es auch zu einer Verlagerung des ersten Steuerabschnitts 44 in gleichem Maße nach unten kommt. Fig. 2B zeigt einen Zwischenzustand, in dem die Betätigungseinheit 72 so weit nach unten verlagert ist, dass ein unteres Stirnende des ersten Steuerabschnitts 44 den kugelförmigen Ventilkörper 30B des Zwischenventils 30 erreicht hat und diesen gegen einen korrespondierenden Ventilsitz 30A der Kammereinheit 74 drückt. Das Zwischenventil 30 ist nun geschlossen.

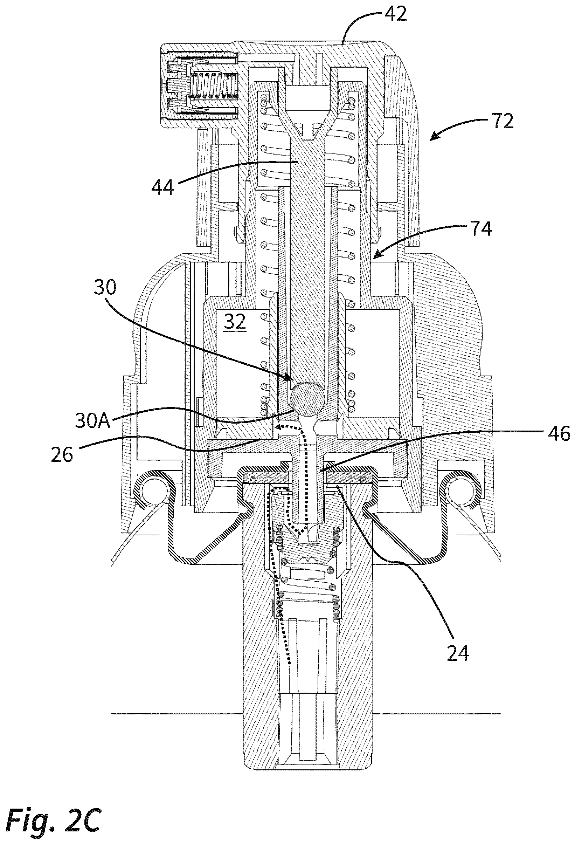

Das fortgesetzte Niederdrücken der Betätigungseinheit 72 führt in der durch Fig. 2C verdeutlichten Weise dazu, dass über einen durch den Ventilkörper 30B verlaufenden Kraftfluss nun die Kammereinheit 74 als Ganzes zusammen mit der Betätigungseinheit 72 niedergedrückt wird. Hiervon betroffen ist auch der zweite Steuerabschnitt 46, der auf das Zufuhrventil 24 wirkt und dieses gegen die Kraft der dortigen Ventilfeder öffnet. Nun kann Flüssigkeit aus dem als Druckspeicher ausgebildeten Flüssigkeitsspeicher 12 entlang der in Fig. 2C gepunktet dargestellten Linie bis in die Vordosierkammer 26 strömen. Ein Einströmen in die Hauptdosierkammer32 ist aufgrund des geschlossenen Zwischenventils 30 nicht möglich.

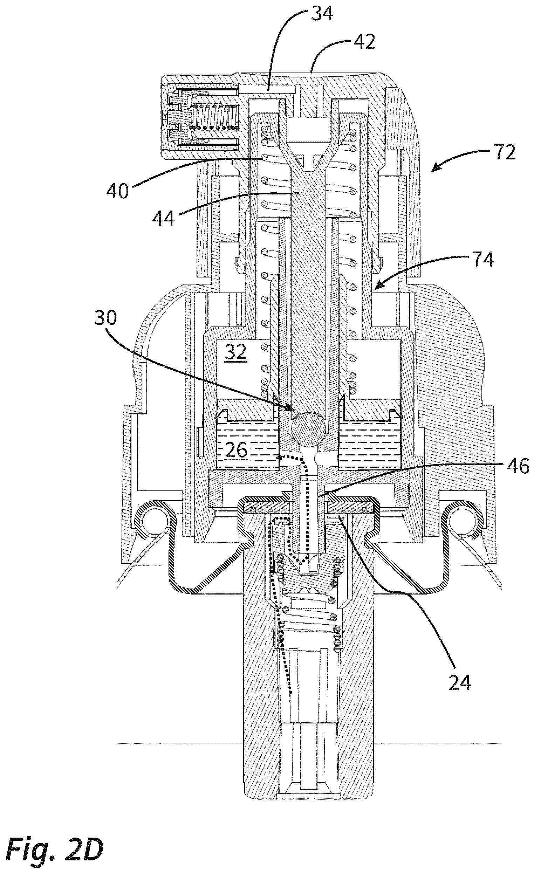

Wie Fig. 2D verdeutlicht, führt das Einströmen der Flüssigkeit in die Vordosierkammer 26 zu deren Vergrößerung, indem die Wandungseinheit 48 gegen die Kraft der Federeinrichtung 40 nach oben verlagert wird. Gleichzeitig wird die Hauptdosierkammer 32 in gleichem Maße verkleinert, so dass die im Lieferzustand darin befindliche Luft komprimiert wird und bei ausreichendem Druck durch den Austragkanal 34 aus dem Spender 10 hinausgedrückt wird.

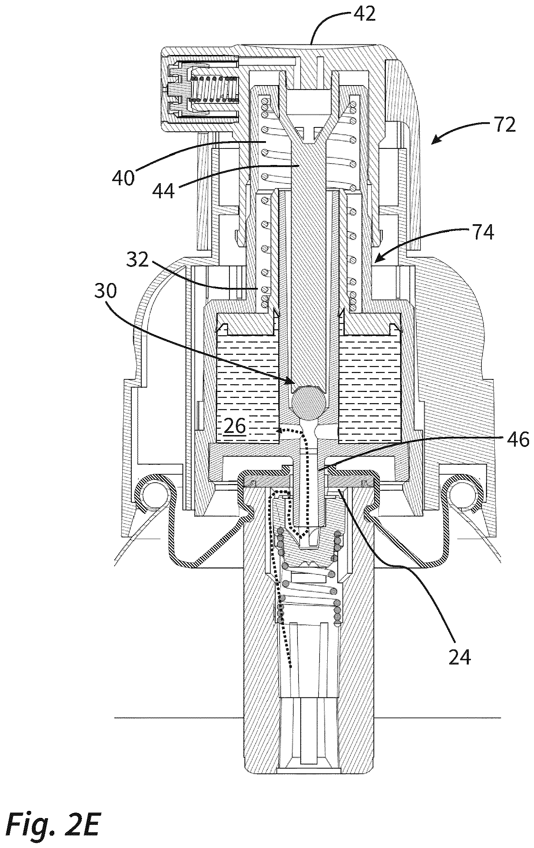

Fig. 2E zeigt den Zustand bei maximal vergrößerter Vordosierkammer 26 und dadurch maximal verkleinerter Hauptdosierkammer 32. Der Zustrom von Flüssigkeit aus dem Flüssigkeitsspeicher 12 endet in diesem Zustand.

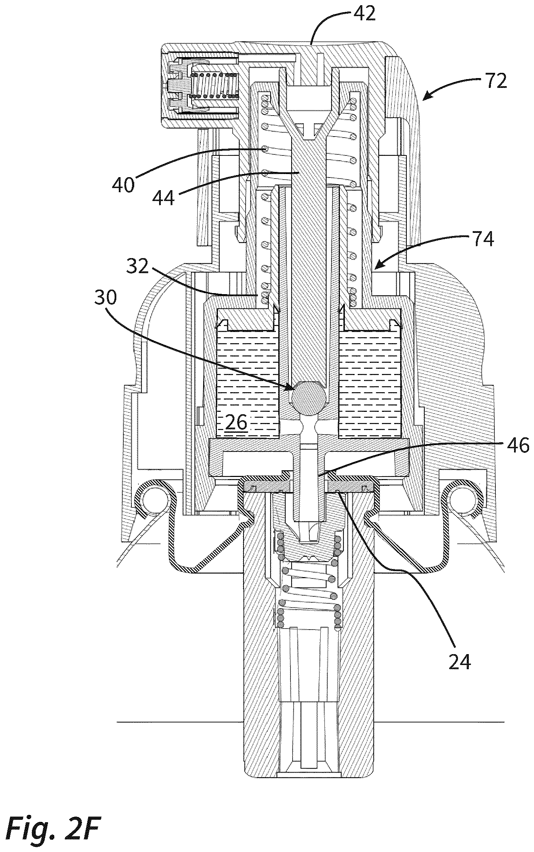

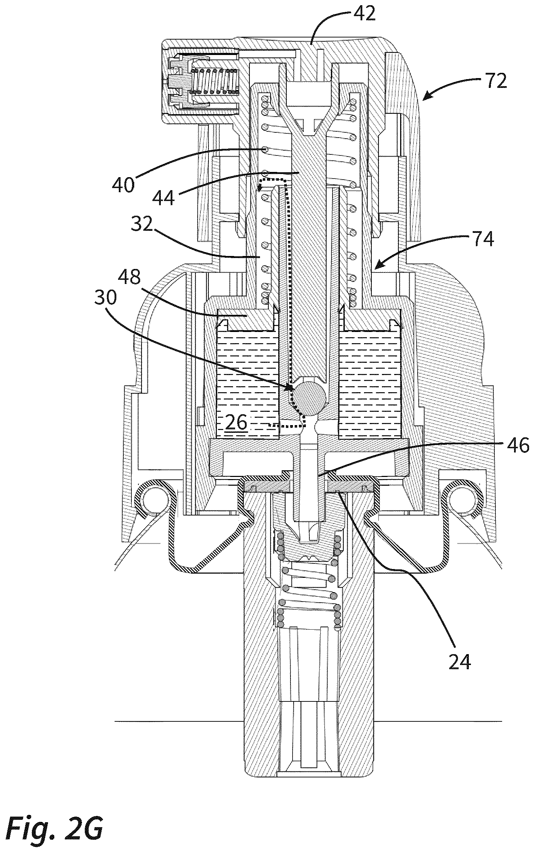

Wenn nun die Betätigungshandhabe 42 losgelassen wird, so führt dies dazu, dass entsprechend der Darstellung der Fig. 2F zunächst das Zufuhrventil 24 schließt und anschließend entsprechend der Fig. 2G das Zwischenventil 30 geöffnet wird, da es nicht mehr durch den ersten Steuerabschnitt 44 in seine geschlossene Stellung gezwungen wird. Nun kann Flüssigkeit entlang des in Fig. 2G gepunktet dargestellten Pfades aus der Vordosierkammer 26 in die Hauptdosierkammer 32 strömen, wobei dies unter der Wirkung der Federeinrichtung 40 erfolgt, die die Wandungseinheit 48 nach unten drückt.

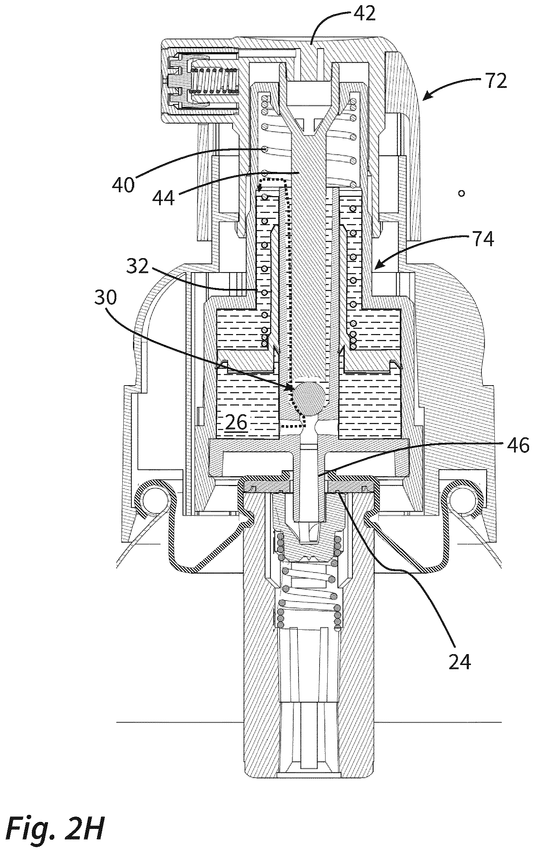

Da bei der Inbetriebnahme des Spenders 10 die Hauptdosierkammer noch mit Luft befüllt war, muss vor einem tatsächlichen Austrag zunächst diese Luft verdrängt werden. Bei dem in den Fig. 2G und 2H dargestellten Umpumpen zwischen der Vordosierkammer 26 und der Hauptdosierkammer 32 entweicht keine Luft, da das Gesamtvolumen von Vordosierkammer 26 und Hauptdosierkammer 32 in dieser Phase im Wesentlichen unverändert ist. Erst wenn ausgehend vom Zustand der Fig. 2H wiederholt der genannte Ablauf durchgeführt wird, wird in den Phasen der Vergrößerung der Vordosierkammer 26 und der Verkleinerung der Hauptdosierkammer 32 Luft durch die Austragöffnung 38 nach außen gefördert, bis schlussendlich die Hauptdosierkammer 32 vollständig mit Flüssigkeit befüllt ist und der Spender bestimmungsgemäß einsetzbar ist.

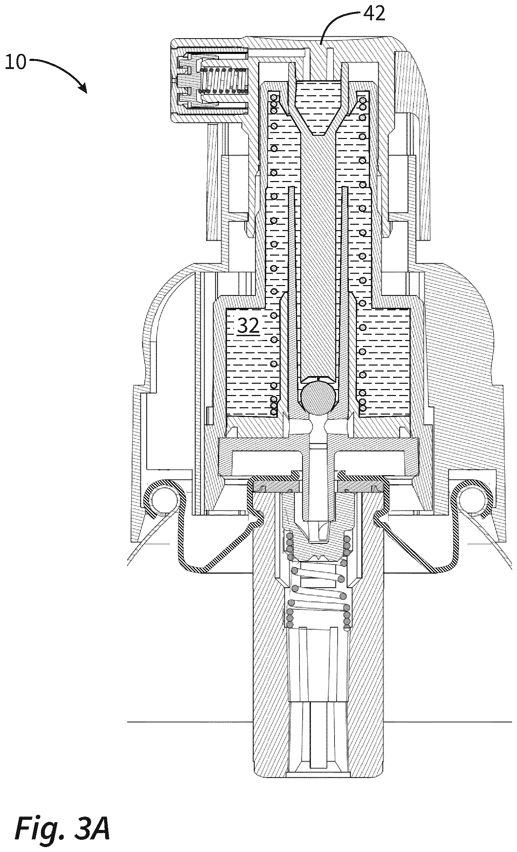

Die Fig. 3A zeigt diesen Zustand des betriebsbereiten Spenders 10 mit vollständig mit Flüssigkeit befüllter Hauptdosierkammer 32. Der Bewegungsablauf der beschriebenen Baugruppen des Spenders 10 entspricht im Betrieb jenem der Inbetriebnahme gemäß der Fig. 2A bis 2H.

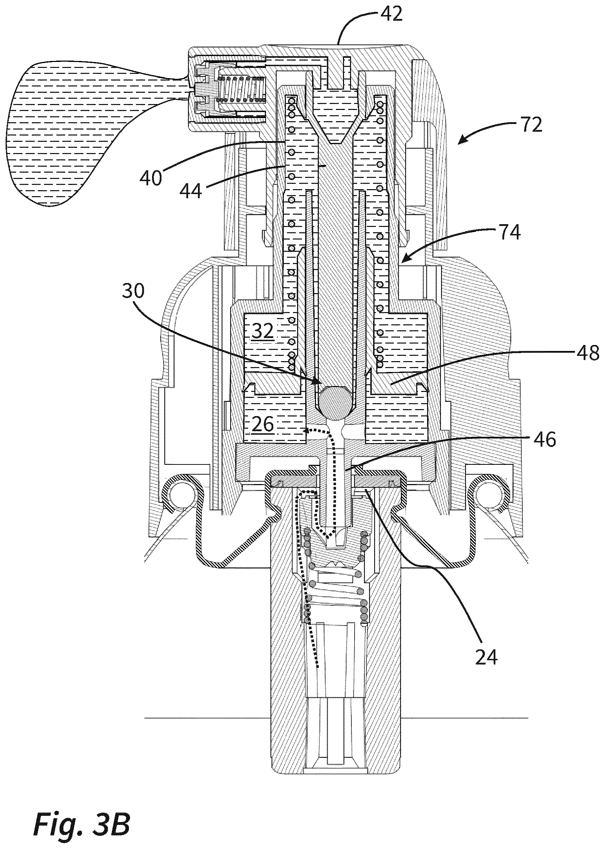

Wenn ausgehend vom unbetätigten betriebsbereiten Zustand der Fig. 3A die Betätigungshandhabe 42 niedergedrückt wird, so führt dies in der durch Fig. 3B verdeutlichten Weise dazu, dass entsprechend der Fig. 2D das Zwischenventil 30 geschlossen wird und das Zufuhrventil 24 geöffnet wird, was wiederum ein Einströmen von Flüssigkeit aus dem Flüssigkeitsspeicher 12 in die Vordosierkammer 26 bewirkt. Hierdurch wird eine Verlagerung der Wandungseinheit 48 nach oben verursacht, wobei diese Wandungsverlagerung wiederum mit einer volumetrischen Verkleinerung der Hauptdosierkammer 32 und einem Austrag von Flüssigkeit durch den Austragkanal 34 und die Austragöffnung 38 verursacht.

Sobald die Betätigungshandhabe 42 nach erfolgtem Austrag wieder losgelassen wird, drückt die Federeinrichtung 40 die Wandungseinheit 48 wieder nach unten und verdrängt somit die Flüssigkeit aus der Vordosierkammer 26 in die Hauptdosierkammer 32, so dass mit der darauffolgenden nächsten Betätigung wiederum Flüssigkeit ausgetragen werden kann.

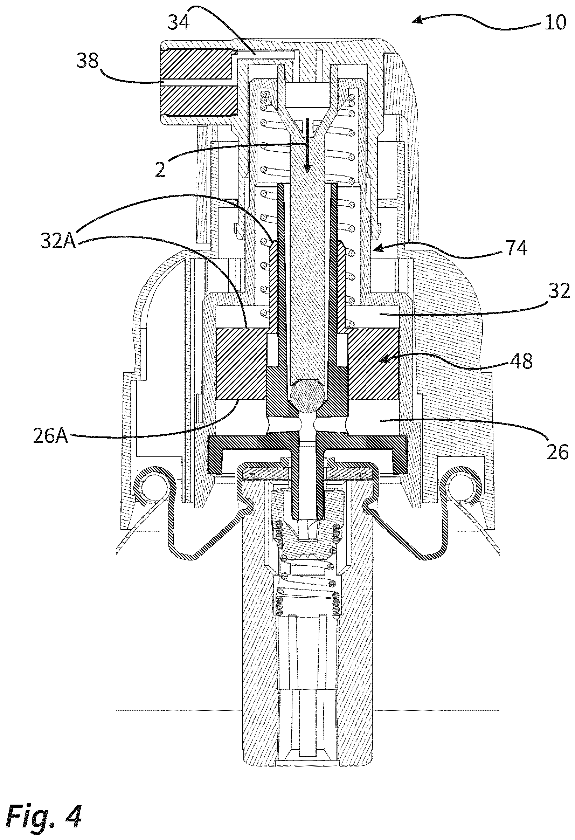

Die Fig. 4 zeigt eine geringfügig geänderte alternative Gestaltung. Soweit im Weiteren nicht explizit anders dargestellt, sind die Bauteile funktional identisch mit denen der Gestaltung der Fig. 2A bis 3B. Bei dieser alternativen Gestaltung sind die Wandungseinheit 48 und die Kammereinheit 74 etwas anders gestaltet, so dass die in Hinblick auf die Bewegungsrichtung 2 druckerzeugende verlagerbare Wandung 26A der Vordosierkammer 26 kleiner als die in Hinblick auf die Bewegungsrichtung 2 druckerzeugende verlagerbare Wandung 32A der Hauptdosierkammer 32 ist. Hierdurch wird bewirkt, dass die Volumenvergrößerung der Hauptdosierkammer 32 beim Umpumpen von Flüssigkeit aus der Vordosierkammer 26 in die Hauptdosierkammer 32 größer ist als die Volumenabnahme der Vordosierkammer 26. Dies bewirkt, dass während des Umpumpens Flüssigkeit aus dem Austragkanal 34 in die Hauptdosierkammer 32 zurückgesogen wird und so die Gefahr einer Verunreinigung der Flüssigkeit verringert wird. Um eine solche Rücksaugung zu erleichtert, weist die Ausgestaltung gemäß Fig. 4 kein Austragventil 36 auf.

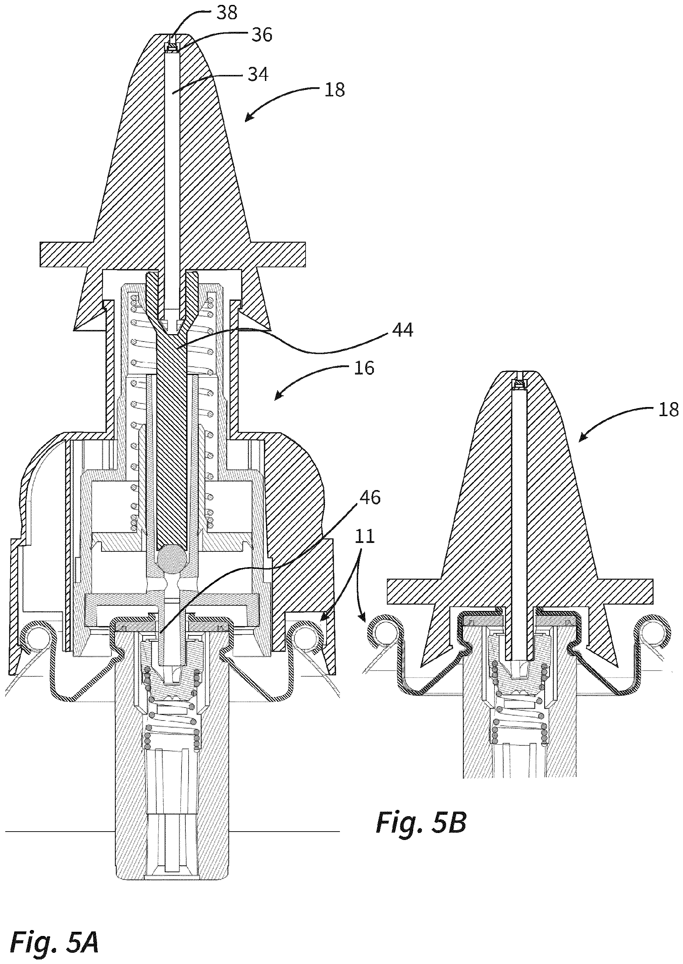

Bei der Ausgestaltung gemäß der Fig. 5A ist die Austrageinheit 18 anders als bei den vorangegangenen Ausführungsformen gestaltet, da hier die Austrageinheit 18 einen Nasalapplikator bildet. Zudem ist bei der Gestaltung gemäß Fig. 5A vorgesehen, dass das Anschlussmaß der Austrageinheit 18 am ersten Steuerabschnitt 44 mit dem Anschlussmaß des zweiten Steuerabschnitts 46 und der Speichereinheit 11 übereinstimmt. Wirkung ist, dass die Adaptereinheit 16 fallweise weggelassen werden kann. Die mit Nasenapplikator ausgestaltete Austrageinheit 18 kann auch unmittelbar mit der Speichereinheit 11 gekoppelt werden, wie Fig. 5B verdeutlicht.

Bis auf die genannten Aspekte ist die bauliche Ausgestaltung der Fig. 5A und 5B zu jener der Fig. 2A bis 3B identisch.

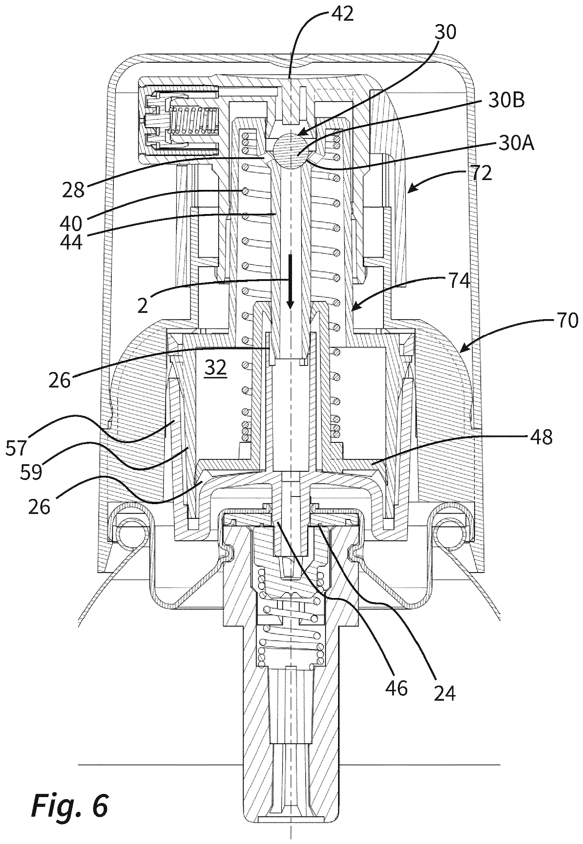

Die Gestaltung gemäß Fig. 6 arbeitet im Normalbetrieb entsprechend den vorangegangenen Gestaltungen und ist insbesondere in Hinblick auf eine erleichterte Herstellbarkeit optimiert. Wesentlicher Unterschied ist der Aufbau der Kammereinheit 74 mit zwei Kammerbauteilen 57, 59, die beide jeweils napfartig ausgestaltet sind und im Bereich zylindrischer Außenwandungen ineinandergeschoben sind. Im überlappenden Bereich ist eine formschlüssige Rastverbindung geschaffen, wobei die Rastnasen eine Formgebung aufweisen, die einer zerstörungsfreien axialen Trennung der Kammerbauteile 57, 59 entgegensteht. Eine Aufweitung des äußeren Kammerbauteils 57 und eine resultieren Trennung der Kammerbauteile wird dadurch verhindert, dass das die Basiseinheit 72 innenseitig eine ausreihende Aufweitung des Kammerbauteils 57 verhindert.

## Patentansprüche

1. Spender (10) zum Austrag von Flüssigkeiten mit den folgenden Merkmalen:
a. der Spender (10) verfügt über einen Flüssigkeitsspeicher (12) zur Lagerung der Flüssigkeit vor dem Austrag, und
b. der Spender (10) verfügt über eine Austragöffnung (38), durch die die Flüssigkeit in eine Umgebung abgegeben werden kann,
c. der Spender (10) verfügt über eine Dosiereinrichtung (20) zur Abgabe einer definierten Flüssigkeitsmenge in Reaktion auf eine Betätigung des Spenders (10), wobei die Dosiereinrichtung eingangsseitig mit dem Flüssigkeitsspeicher (12) verbunden ist und ausgangsseitig mit der Austragöffnung (38) verbunden ist, und
d. die Dosiereinrichtung (20) verfügt über eine Vordosierkammer (26), die über einen Zufuhrkanal (22) mit dem Flüssigkeitsspeicher (12) verbunden ist, und
e. die Dosiereinrichtung verfügt über eine Hauptdosierkammer (32), die über einen Zwischenkanal (28) mit der Vordosierkammer (26) verbunden ist und über einen Austragkanal (34) mit der Austragöffnung (38) verbunden ist, und
f. die Vordosierkammer (26) und die Hauptdosierkammer (32) weisen jeweils eine verlagerbare Wandung (26A, 32A) auf, durch deren Verlagerung das jeweilige Kammervolumen veränderbar ist, und
g. die verlagerbaren Wandungen (26A, 32A) der Vordosierkammer (26) und der Hauptdosierkammer (32) sind derart wirkgekoppelt, dass eine Volumenvergrößerung der Vordosierkammer (26) eine Volumenverkleinerung der Hauptdosierkammer (32) verursacht, und
h. im Zufuhrkanal (22) ist ein Zufuhrventil (24) vorgesehen, welches im geschlossenen Zustand das Einströmen von Flüssigkeit aus dem Flüssigkeitsspeicher (12) in die Vordosierkammer (26) verhindert und im offenen Zustand ermöglicht,
**gekennzeichnet durch** die folgenden Merkmale:
i. im Zwischenkanal (28) ist ein Zwischenventil (30) vorgesehen, welches im geschlossenen Zustand das Einströmen von Flüssigkeit aus der Vordosierkammer (26) in die Hauptdosierkammer (32) verhindert und im offenen Zustand ermöglicht.

2. Spender (10) zum Austrag von Flüssigkeiten nach Anspruch 1 mit dem folgenden zusätzlichen Merkmal:
a. es ist eine Federeinrichtung (40) vorgesehen, durch die die wirkgekoppelten Wandungen (26A, 32A) der Vordosierkammer (26) und der Hauptdosierkammer (32) permanent in Wirkungsrichtung einer Volumenverkleinerung der Vordosierkammer (26) und einer Volumenvergrößerung der Hauptdosierkammer (32) kraftbeaufschlagt sind.

3. Spender (10) zum Austrag von Flüssigkeiten nach Anspruch 2 mit dem folgenden zusätzlichen Merkmal:
a. es ist eine Betätigungshandhabe (42) vorgesehen, die zur Steuerung des Zufuhrventils (24) und/oder des Zwischenventils (30) mit mindestens einem dieser Ventile (24, 30) wirkverbunden ist,
insbesondere mit dem zusätzlichen Merkmal:
b. die Betätigungshandhabe (42) wirkt auf mechanischem Wege auf das Zufuhrventil (24) bzw. das Zwischenventil (30), so dass die Steuerung des jeweiligen Ventils (24, 30) ungeachtet eines im Spender (10) bestehenden Flüssigkeitsdrucks ermöglicht ist.

4. Spender (10) zum Austrag von Flüssigkeiten nach Anspruch 3 mit den folgenden zusätzlichen Merkmalen:
a. es ist eine gemeinsame Betätigungshandhabe (42) vorgesehen, die zur Steuerung des Zufuhrventils (24) und des Zwischenventils (30) mit beiden Ventilen (24, 30) wirkverbunden ist, und
b. die Wirkverbindungen zwischen der gemeinsamen Betätigungshandhabe (42) einerseits und dem Zufuhrventil (24) und dem Zwischenventil (30) andererseits ist derart beschaffen, dass durch Betätigung der gemeinsamen Betätigungshandhabe (42) das Zwischenventil (30) geschlossen und das Zufuhrventil (24) geöffnet wird.

5. Spender (10) zum Austrag von Flüssigkeiten nach Anspruch 4 mit dem folgenden zusätzlichen Merkmal:
a. die Wirkverbindungen zwischen der gemeinsamen Betätigungshandhabe (42) einerseits und dem Zufuhrventil (24) und dem Zwischenventil (30) andererseits ist derart beschaffen, dass durch Betätigung der gemeinsamen Betätigungshandhabe (42) zunächst das Zwischenventil (30) geschlossen wird und durch anschließend fortgesetzte Betätigung der gemeinsamen Betätigungshandhabe das Zufuhrventil (24) geöffnet wird,
insbesondere mit dem folgenden zusätzlichen Merkmal:
b. das Zwischenventil (30) weist einen Ventilsitz (30A) und einem demgegenüber beweglichen Ventilkörper (30B) auf, wobei zur Steuerung dieses Ventilkörpers (30B) mittels der gemeinsamen Betätigungshandhabe (42) ein fest mit der gemeinsamen Betätigungshandhabe (42) verbundener erster Steuerabschnitt (44) vorgesehen ist, der bei Betätigung der Betätigungshandhabe (42) den Ventilkörper (30B) gegen den Ventilsitz (30A) presst, und
c. es ist ein zweiter Steuerabschnitt (46) zur Betätigung des Zufuhrventils (24) vorgesehen, wobei dieser zweite Steuerabschnitt (46) ortsfest zum Ventilsitz (30A) des Zwischenventils angeordnet ist, so dass nach Schließen des Zwischenventils (30) der zweite Steuerabschnitt (46) über die gemeinsame Betätigungshandhabe (42) zum Öffnen des Zufuhrventils (24) verlagerbar ist.

6. Spender (10) zum Austrag von Flüssigkeiten nach einem der vorstehenden Ansprüche mit dem folgenden zusätzlichen Merkmal:
a. die verlagerbaren Wandungen (26A, 32A) der Vordosierkammer (26) und der Hauptdosierkammer (32) sind als verschiebliche Wandungen ausgebildet, die zueinander ortsfest sind und dadurch eine gemeinsame Wandungseinheit (48) bilden,
vorzugsweise mit einem der folgenden zusätzlichen Merkmale:
b. die verlagerbaren Wandungen (26A, 32A) der Vordosierkammer (26) und der Hauptdosierkammer (32) weisen eine identische Größe auf, so dass eine Volumenverkleinerung der Vordosierkammer (26) durch Verlagerung der Wandungseinheit (48) eine Volumenvergrößerung der Hauptdosierkammer (32) in gleichem Maße verursacht, oder
c. die verlagerbare Wandung (26A) der Vordosierkammer (26) ist kleiner als die verlagerbare Wandung (32A) der Hauptdosierkammer (32), so dass eine Volumenverkleinerung der Vordosierkammer (26) durch Verlagerung der Wandungseinheit (48) eine Volumenvergrößerung der Hauptdosierkammer (32) in höherem Maße verursacht, oder
d. die verlagerbare Wandung (26A) der Vordosierkammer (26) ist größer als die verlagerbare Wandung (32A) der Hauptdosierkammer (32), so dass eine Volumenverkleinerung der Vordosierkammer (26) durch Verlagerung der Wandungseinheit (48) eine Volumenvergrößerung der Hauptdosierkammer (32) in geringerem Maße verursacht.

7. Spender (10) zum Austrag von Flüssigkeiten nach einem der vorstehenden Ansprüche mit einem der folgenden zusätzlichen Merkmale:
a. der Spender (10) verfügt als Flüssigkeitsspeicher (12) über einen Druckspeicher, der dafür ausgebildet ist, Flüssigkeit unter Überdruck zu speichern, oder
b. der Spender verfügt über eine Druckbeaufschlagungseinrichtung, mittels derer Flüssigkeit aus dem Flüssigkeitsspeicher zum Zwecke der Zuführung in die Vordosierkammer druckbeaufschlagbar ist.

8. Spender (10) zum Austrag von Flüssigkeiten nach einem der vorstehenden Ansprüche mit den folgenden zusätzlichen Merkmalen:
a. der Spender (10) verfügt über eine Speichereinheit (11), die den Flüssigkeitsspeicher (12) aufweist, und
b. der Spender verfügt über einen an der Speichereinheit (11) mittels einer Befestigungseinrichtung (50) befestigten Austragkopf (14), der die Vordosierkammer (26), die Hauptdosierkammer (32) und die Austragöffnung (38) aufweist.

9. Spender (10) zum Austrag von Flüssigkeiten nach Anspruch 8 mit den folgenden zusätzlichen Merkmalen:
a. derAustragkopf (14) weist eine Adaptereinheit (16) und eine Austrageinheit (18) auf, und
b. die Adaptereinheit (16) weist die Befestigungseinrichtung (50) zur Befestigung an der Speichereinheit (11) auf, und
c. die Austrageinheit (18) weist die Austragöffnung (38) auf, und
d. die Adaptereinheit (16) und die Austrageinheit (18) sind insbesondere durch eine kraftschlüssig haltende Steckverbindung miteinander verbunden.

10. Spender (10) zum Austrag von Flüssigkeiten nach einem der Ansprüche 8 oder 9 mit den folgenden zusätzlichen Merkmalen:
a. die Vordosierkammer (26) und/oder die Hauptdosierkammer (32) werden durch zwei gemeinsame Kammerbauteile (56, 58; 57,59) begrenzt, die in einer axialen Richtung miteinander verbunden sind,
vorzugsweise mit mindestens einem der folgenden zusätzlichen Merkmale:
b. die Kammerbauteile (56, 58; 57,59) umfassen jeweils einen zylindrischen Außenabschnitt, wobei die beiden Außenabschnitte überlappend ineinander geschoben sind, und/oder
c. mindestens eines der Kammerbauteile (56, 58; 57,59) umfasst einen zylindrischen Außenabschnitt, wobei dieser durch ein Basisgehäuse (70) des Austragkopfes (14) derart umgeben ist, dass eine Aufweitung des Außenabschnittes begrenzt wird, um einer Trennung der Kammerbauteile entgegenzuwirken.

11. Spender (10) zum Austrag von Flüssigkeiten nach einem der vorstehenden Ansprüche mit den folgenden zusätzlichen Merkmalen:
a. der Austragkopf (14) verfügt über ein Basisgehäuse (70), welches über die Befestigungseinrichtung ortsfest mit dem Flüssigkeitsspeicher (12) verbunden ist, und
b. der Austragkopf (14) verfügt über ein linear gegenüber dem Basisgehäuse (70) bewegliche Betätigungseinheit (72), die die Betätigungshandhabe (42) umfasst, und
c. der Austragkopf (14) verfügt über eine linear gegenüber dem Basisgehäuse (70) und der Betätigungseinheit (72) bewegliche Kammereinheit (74), die die Außenwandung der Vordosierkammer und/oder der Hauptdosierkammer bildet.

12. Spender (10) zum Austrag von Flüssigkeiten nach einem der vorstehenden Ansprüche mit dem folgenden zusätzlichen Merkmal:
a. im Austragkanal (34) ist ein Austragventil (36) vorgesehen, welches in Abhängigkeit des Drucks der von der Hauptdosierkammer einströmenden Flüssigkeit öffnet.

13. Spender (10) zum Austrag von Flüssigkeiten nach einem der vorstehenden Ansprüche mit mindestens einem der folgenden zusätzlichen Merkmale:
a. der Flüssigkeitsspeicher ist mit einer Flüssigkeit befüllt, bei der es sich um eine der folgenden Flüssigkeiten handelt: Lebensmittelflüssigkeit, wie Speiseöle, Mayonnaise oder Ketchup, technische Flüssigkeit wie Lacke oder Maschinenöle, pharmazeutische Flüssigkeit oder kosmetische Flüssigkeit, und/oder
b. der Flüssigkeitsspeicher weist ein Volumen von bis zu 1000 ml auf, vorzugsweise von bis zu 500 ml, insbesondere vorzugsweise von bis zu 250 ml, und/oder
c. ein Austragvolumen der Dosiereinrichtung (20), welches durch die Verlagerbarkeit der verlagerbaren Wandung (32A) der Hauptdosierkammer (32) bestimmt ist, beträgt zwischen 0,01 ml und 5 ml, insbesondere zwischen 1 ml und 2 ml und/oder
d. das Zwischenventil (30) umfasst einen Ventilkörper (30B), der in einem Ventilraum beweglich ist, wobei im Ventilraum eingangsseitig der Ventilsitz vorgesehen ist und wobei der Ventilraum mittels der Betätigungshandhabe (42) verkleinerbar ist und/oder
e. die verlagerbaren Wandungen (26A, 30A) sind, insbesondere als Teil der Wandungseinheit (48), in Bewegungsrichtung der Betätigungshandhabe verlagerbar.

14. Betriebsverfahren unter Verwendung eines Spenders (10) zum Austrag von Flüssigkeiten nach einem der vorstehenden Ansprüche mit den folgenden Schritten:
a. die Vordosierkammer (26) wird durch den Zufuhrkanal (22) mit druckbeaufschlagter Flüssigkeit aus dem Flüssigkeitsspeicher (12) befüllt, wobei sie dabei durch druckbedingte Verlagerung der verlagerbaren Wandung (26A) der Vordosierkammer (26) ihr maximales Volumen einnimmt und die Hauptdosierkammer (32) durch hiervon verursachter Verlagerung der verlagerbaren Wandung (32A) ihr minimales Volumen einnimmt, und
b. die Flüssigkeit aus der Vordosierkammer (26) wird unter Verlagerung der verlagerbaren Wandung (26A) durch den Zwischenkanal (28) in die Hauptdosierkammer (32) gefördert, bis die Hauptdosierkammer (32) ihr maximales Volumen einnimmt und die Vordosierkammer (26) ihr minimales Volumen einnimmt, und
c. im Zuge einer nochmaligen Befüllung der Vordosierkammer (26) durch den Zufuhrkanal (22) mit druckbeaufschlagter Flüssigkeit aus dem Flüssigkeitsspeicher (12) werden die verlagerbaren Wandungen (26A, 32A) der Vordosierkammer (26) und der Hauptdosierkammer (32) wiederum verlagert, so dass das Volumen der Hauptdosierkammer (32) verringert wird und die Flüssigkeit aus der Hauptdosierkammer (32) durch die Austragöffnung (38) hindurch ausgetragen wird.

## Claims

1. Dispenser (10) for discharging liquids, having the following features:
a. the dispenser (10) includes a liquid reservoir (12) for storing the liquid prior to discharging, and
b. the dispenser (10) includes a discharge opening (38) through which the liquid can be dispensed into an environment,
c. the dispenser (10) includes a metering installation (20) for discharging a defined liquid quantity as a reaction to an activation of the dispenser (10), wherein the metering installation at the entry side is connected to the liquid reservoir (12) and at the exit side is connected to the discharge opening (38), and
d. the metering installation (20) includes a pre-metering chamber (26) which by way of an infeed duct (22) is connected to the liquid reservoir (12), and
e. the metering installation includes a main metering chamber (32) which by way of an intermediate duct (28) is connected to the pre-metering chamber (26) and by way of a discharge duct (34) is connected to the discharge opening (38), and
f. the pre-metering chamber (26) and the main metering chamber (32) each have a repositionable wall (26A, 32A), the respective chamber volume being variable by the repositioning of said wall (26A, 32A), and
g. the repositionable walls (26A, 32A) of the pre-metering chamber (26) and of the main metering chamber (32) are operatively coupled in such a manner that a volumetric enlargement of the pre-metering chamber (26) causes a volumetric reduction of the main metering chamber (32), and
h. an infeed valve (24) which in the closed state prevents and in the opened state enables the inflow of liquid from the liquid reservoir (12) into the pre-metering chamber (26) is provided in the infeed duct (22),
**characterized by** the following feature:
i. an intermediate valve (30) which in the closed state prevents and in the opened state enables the inflow of liquid from the pre-metering chamber (26) into the main metering chamber (32) is provided in the intermediate duct (28).

2. Dispenser (10) for discharging liquids according to Claim 1, having the following additional feature:
a. a spring installation (40) by way of which the operatively coupled walls (26A, 32A) of the pre-metering chamber (26) and of the main metering chamber (32) are permanently impinged with a force in the effective direction of a volumetric reduction of the pre-metering chamber (26) and a volumetric enlargement of the main metering chamber (32) is provided.

3. Dispenser (10) for discharging liquids according to Claim 2, having the following additional feature:
a. an activation handle (42) which for controlling the infeed valve (24) and/or the intermediate valve (30) is operatively connected to at least one of said valves (24, 30) is provided,
in particular having the additional feature:
b. the activation handle (42) acts mechanically on the infeed valve (24) or the intermediate valve (30) respectively, so that the control of the respective valve (24, 30) is enabled irrespectively of a liquid pressure prevailing in the dispenser (10).

4. Dispenser (10) for discharging liquids according to Claim 3, having the following additional features:
a. a common activation handle (42) which for controlling the infeed valve (24) and the intermediate valve (30) is operatively connected to both valves (24, 30) is provided, and
b. the operative connections between the common activation handle (42), on the one hand, and the infeed valve (24) and the intermediate valve (30), on the other hand, are specified in such a manner that the intermediate valve (30) is closed and the infeed valve (24) is opened by activating the common activation handle (42) .

5. Dispenser (10) for discharging liquids according to Claim 4, having the following additional feature:
a. the operative connections between the common activation handle (42), on the one hand, and the infeed valve (24) and the intermediate valve (30), on the other hand, are specified in such a manner that the intermediate valve (30) is initially closed by activating the common activation handle (42), and the infeed valve (24) is opened by the subsequent, continuing, activation of the common activation handle,
in particular having the following additional features:
b. the intermediate valve (30) has a valve seat (30A) and a valve body (30B) that is movable in relation thereto, wherein for controlling said valve body (30B) by means of the common activation handle (42) a first control portion (44) which is fixedly connected to the common activation handle (42) and which when activating the activation handle (42) presses the valve body (30B) against the valve seat (30A) is provided, and
c. a second control portion (46) for activating the infeed valve (24) is provided, wherein said second control portion (46) is disposed so as to be locationally fixed in relation to the valve seat (30A) of the intermediate valve such that, after the closing of the intermediate valve (30), the second control portion (46) for opening the infeed valve (24) is repositionable by way of the common activation handle (42).

6. Dispenser (10) for discharging liquids according to one of the preceding claims, having the following additional feature:
a. the repositionable walls (26A, 32A) of the pre-metering chamber (26) and of the main metering chamber (32) are configured as displaceable walls which are mutually locationally fixed and, on account thereof, form a common wall unit (48),
preferably having one of the following additional features:
b. the repositionable walls (26A, 32A) of the pre-metering chamber (26) and of the main metering chamber (32) are of identical size such that a volumetric reduction of the pre-metering chamber (26) by repositioning the wall unit (48) to the same extent causes a volumetric enlargement of the main metering chamber (32), or
c. the repositionable wall (26A) of the pre-metering chamber (26) is smaller than the repositionable wall (32A) of the main metering chamber (32) such that a volumetric reduction of the pre-metering chamber (26) by repositioning the wall unit (48) causes to a greater extent a volumetric enlargement of the main metering chamber (32), or
d. the repositionable wall (26A) of the pre-metering chamber (26) is larger than the repositionable wall (32A) of the main metering chamber (32) such that a volumetric reduction of the pre-metering chamber (26) by repositioning the wall unit (48) causes to a lesser extent a volumetric enlargement of the main metering chamber (32).

7. Dispenser (10) for discharging liquids according to one of the preceding claims, having one of the following additional features:
a. the dispenser (10) as a liquid reservoir (12) includes a pressure reservoir which is configured for storing liquid at a positive pressure, or
b. the dispenser includes a pressure-impingement installation by means of which liquid from the liquid reservoir for the purpose of feeding into the pre-metering chamber is capable of being impinged with pressure.

8. Dispenser (10) for discharging liquids according to one of the preceding claims, having the following additional features:
a. the dispenser (10) includes a storage unit (11) which comprises the liquid reservoir (12), and
b. the dispenser includes a discharge head (14) which by means of a fastening installation (50) is fastened to the storage unit (11) and which comprises the pre-metering chamber (26), the main metering chamber (32), and the discharge opening (38).

9. Dispenser (10) for discharging liquids according to Claim 8, having the following additional features:
a. the discharge head (14) has an adapter unit (16) and a discharge unit (18), and
b. the adapter unit (16) has the fastening installation (50) for fastening to the storage unit (11), and
c. the discharge unit (18) has the discharge opening (38), and
d. the adapter unit (16) and the discharge unit (18) are connected to one another in particular by a force-fitting plug connection.

10. Dispenser (10) for discharging liquids according to one of Claims 8 or 9, having the following additional features:
a. the pre-metering chamber (26) and/or the main metering chamber (32) are delimited by two common chamber components (56, 58; 57, 59) which are connected to one another in an axial direction,
preferably having at least one of the following additional features:
b. the chamber components (56, 58; 57, 59) comprise in each case one cylindrical external portion, wherein the two external portions are push-fitted into one another in an overlapping manner, and/or
c. at least one of the chamber components (56, 58; 57, 59) comprises a cylindrical external portion, wherein the latter by a basic housing (70) of the discharge head (14) is surrounded in such a manner that a widening of the external portion is delimited so as to counteract any separation of the chamber components.

11. Dispenser (10) for discharging liquids according to one of the preceding claims, having the following additional features:
a. the discharge head (14) includes a basic housing (70) which by way of the fastening installation is connected in a locationally fixed manner to the liquid reservoir (12), and
b. the discharge head (14) includes an activation unit (72) which is movable in a linear manner in relation to the basic housing (70) and which comprises the activation handle (42), and
c. the discharge head (14) includes a chamber unit (74) which is movable in a linear manner in relation to the basic housing (70) and the activation unit (72) and which forms the external wall of the pre-metering chamber and/or of the main metering chamber.

12. Dispenser (10) for discharging liquids according to one of the preceding claims, having the following additional feature:
a. a discharge valve (36) which opens as a function of the pressure of the liquid flowing in from the main metering chamber is provided in the discharge duct (34).

13. Dispenser (10) for discharging liquids according to one of the preceding claims, having at least one of the following additional features:
a. the liquid reservoir is filled with a liquid which is one of the following liquids: foodstuff liquid such as edible oils, mayonnaise or ketchup, technical liquid such as paints or lubricants, pharmaceutical liquid, or cosmetic liquid, and/or
b. the liquid reservoir has a volume of up to 1000 ml, preferably of up to 500 ml, particularly preferably of up to 250 ml, and/or
c. a discharge volume of the metering installation (20) which is determined by the repositioning capability of the repositionable wall (32A) of the main metering chamber (32) is between 0.01 ml and 5 ml, in particular between 1 ml and 2 ml, and/or
d. the intermediate valve (30) comprises a valve body (30B) which is movable in a valve chamber, wherein the valve seat is provided on the entry side in the valve chamber, and wherein the valve chamber is reducible in size by means of the activation handle (42), and/or
e. the repositionable walls (26A, 30A), in particular as part of the wall unit (48), are repositionable in the movement direction of the activation handle.

14. Operating method using a dispenser (10) for discharging liquids according to one of the preceding claims, said operating method comprising the following steps:
a. the pre-metering chamber (26) by way of the infeed duct (22) is filled with pressurized liquid from the liquid reservoir (12), wherein said pre-metering chamber (26) on account of a pressure-related repositioning of the repositionable wall (26A) of the pre-metering chamber (26) assumes the maximum volume of said pre-metering chamber (26), and the main metering chamber (32), on account of the repositioning of the repositionable wall (32A) caused thereby, assumes the minimum volume of said main metering chamber (32), and
b. the liquid from the pre-metering chamber (26) while repositioning the repositionable wall (26A) is conveyed through the intermediate duct (28) into the main metering chamber (32) until the main metering chamber (32) assumes the maximum volume thereof and the pre-metering chamber (26) assumes the minimum volume thereof, and
c. in the course of a renewed filling of the pre-metering chamber (26) by way of the infeed duct (22) with pressurized liquid from the liquid reservoir (12), the repositionable walls (26A, 32A) of the pre-metering chamber (26) and of the main metering chamber (32) are repositioned yet again such that the volume of the main metering chamber (32) is reduced and the liquid from the main metering chamber (32) is discharged through the discharge opening (38).

## Revendications

1. Distributeur (10) pour décharger des liquides, comprenant les caractéristiques suivantes :
a. le distributeur (10) dispose d'un réservoir de liquide (12) pour stocker le liquide avant sa décharge, et
b. le distributeur (10) dispose d'une ouverture de décharge (38) à travers laquelle le liquide peut être délivré dans un environnement,
c. le distributeur (10) dispose d'un dispositif de dosage (20) pour délivrer une quantité de liquide définie en réaction à un actionnement du distributeur (10), le dispositif de dosage étant connecté du côté de l'entrée au réservoir de liquide (12) et étant connecté du côté de la sortie à l'ouverture de décharge (38), et
d. le dispositif de dosage (20) dispose d'une chambre de prédosage (26) qui est connectée au réservoir de liquide (12) par le biais d'un canal d'alimentation (22), et
e. le dispositif de dosage dispose d'une chambre de dosage principale (32) qui est connectée par le biais d'un canal intermédiaire (28) à la chambre de prédosage (26) et qui est connectée par le biais d'un canal de décharge (34) à l'ouverture de décharge (38), et
f. la chambre de prédosage (26) et la chambre de dosage principale (32) présentent chacune une paroi déplaçable (26A, 32A) dont le déplacement permet de modifier le volume respectif de la chambre, et
g. les parois déplaçables (26A, 32A) de la chambre de prédosage (26) et de la chambre de dosage principale (32) sont accouplées fonctionnellement de telle sorte qu'une augmentation de volume de la chambre de prédosage (26) provoque une réduction de volume de la chambre de dosage principale (32), et
h. une soupape d'alimentation (24) est prévue dans le canal d'alimentation (22), laquelle, à l'état fermé, empêche l'afflux de liquide hors du réservoir de liquide (12) dans la chambre de prédosage (26) et, à l'état ouvert, le permet,
**caractérisé par** la caractéristique suivante :
i. dans le canal intermédiaire (28) est prévue une soupape intermédiaire (30) qui, à l'état fermé, empêche l'afflux de liquide hors de la chambre de prédosage (26) dans la chambre de dosage principale (32), et qui, à l'état ouvert, le permet.

2. Distributeur (10) pour décharger des liquides selon la revendication 1, comprenant la caractéristique supplémentaire suivante :
a. il est prévu un dispositif de ressort (40) par le biais duquel les parois (26A, 32A) accouplées fonctionnellement de la chambre de prédosage (26) et de la chambre de dosage principale (32) sont sollicitées en permanence par une force dans la direction d'action d'une réduction de volume de la chambre de prédosage (26) et d'une augmentation de volume de la chambre de dosage principale (32).

3. Distributeur (10) pour décharger des liquides selon la revendication 2, comprenant la caractéristique supplémentaire suivante :
a. il est prévu une manette d'actionnement (42) qui, pour commander la soupape d'alimentation (24) et/ou la soupape intermédiaire (30), est en liaison fonctionnelle avec au moins l'une de ces soupapes (24, 30) ,
en particulier comprenant la caractéristique supplémentaire :
b. la manette d'actionnement (42) agit de manière mécanique sur la soupape d'alimentation (24) ou sur la soupape intermédiaire (30), de telle sorte que la commande de la soupape respective (24, 30) soit possible quelle que soit la pression de liquide existant dans le distributeur (10).

4. Distributeur (10) pour décharger des liquides selon la revendication 3, comprenant les caractéristiques supplémentaires suivantes :
a. il est prévu une manette d'actionnement commune (42) qui, pour commander la soupape d'alimentation (24) et/ou la soupape intermédiaire (30), est en liaison fonctionnelle avec les deux soupapes (24, 30), et
b. les liaisons fonctionnelles entre la manette d'actionnement commune (42) d'une part et la soupape d'alimentation (24) et la soupape intermédiaire (30) d'autre part sont réalisées de telle sorte que par actionnement de la manette d'actionnement commune (42), la soupape intermédiaire (30) soit fermée et la soupape d'alimentation (24) soit ouverte.

5. Distributeur (10) pour décharger des liquides selon la revendication 4, comprenant la caractéristique supplémentaire suivante :
a. les liaisons fonctionnelles entre la manette d'actionnement commune (42) d'une part et la soupape d'alimentation (24) et la soupape intermédiaire (30) d'autre part sont réalisées de telle sorte que par actionnement de la manette d'actionnement commune (42), la soupape intermédiaire (30) soit d'abord fermée et que par un nouvel actionnement subséquent de la manette d'actionnement commune, la soupape d'alimentation (24) soit ouverte,
en particulier comprenant les caractéristiques supplémentaires suivantes :
b. la soupape intermédiaire (30) présente un siège de soupape (30A) et un corps de soupape (30B) déplaçable par rapport à celui-ci, une première portion de commande (44) connectée fixement à la manette d'actionnement commune (42) étant prévue pour commander ce corps de soupape (30B) au moyen de la manette d'actionnement commune (42), ladite première portion de commande, lors de l'actionnement de la manette d'actionnement (42), poussant le corps de soupape (30B) contre le siège de soupape (30A), et
c. il est prévu une deuxième portion de commande (46) pour actionner la soupape d'alimentation (24), cette deuxième portion de commande (46) étant disposée fixement par rapport au siège de soupape (30A) de la soupape intermédiaire de telle sorte qu'après la fermeture de la soupape intermédiaire (30), la deuxième portion de commande (46) puisse être déplacée par le biais de la manette d'actionnement commune (42) pour ouvrir la soupape d'alimentation (24).

6. Distributeur (10) pour décharger des liquides selon l'une quelconque des revendications précédentes, comprenant la caractéristique supplémentaire suivante :
a. les parois déplaçables (26A, 32A) de la chambre de prédosage (26) et de la chambre de dosage principale (32) sont réalisées sous forme de parois coulissantes qui sont fixées l'une par rapport à l'autre et qui forment de ce fait une unité de paroi commune (48),
de préférence comprenant l'une des caractéristiques supplémentaires suivantes :
b. les parois déplaçables (26A, 32A) de la chambre de prédosage (26) et de la chambre de dosage principale (32) présentent une taille identique, de telle sorte qu'une réduction de volume de la chambre de prédosage (26) provoque, par déplacement de l'unité de paroi (48), une augmentation de volume de la chambre de dosage principale (32) dans une mesure identique, ou
c. la paroi déplaçable (26A) de la chambre de prédosage (26) est plus petite que la paroi déplaçable (32A) de la chambre de dosage principale (32), de telle sorte qu'une réduction de volume de la chambre de prédosage (26) provoque, par déplacement de l'unité de paroi (48), une augmentation de volume de la chambre de dosage principale (32) dans une plus grande mesure, ou
d. la paroi déplaçable (26A) de la chambre de prédosage (26) est plus grande que la paroi déplaçable (32A) de la chambre de dosage principale (32), de telle sorte qu'une réduction de volume de la chambre de prédosage (26) provoque, par déplacement de l'unité de paroi (48), une augmentation de volume de la chambre de dosage principale (32) dans une moindre mesure.

7. Distributeur (10) pour décharger des liquides selon l'une quelconque des revendications précédentes, comprenant l'une des caractéristiques supplémentaires suivantes :
a. le distributeur (10) dispose, en tant que réservoir de liquide (12), d'un réservoir sous pression qui est réalisé pour stocker un liquide dans des conditions de surpression, ou
b. le distributeur dispose d'un dispositif de sollicitation en pression au moyen duquel du liquide peut être sollicité en pression hors du réservoir de liquide en vue de son acheminement à la chambre de prédosage.

8. Distributeur (10) pour décharger des liquides selon l'une quelconque des revendications précédentes, comprenant les caractéristiques supplémentaires suivantes :
a. le distributeur (10) dispose d'une unité de réservoir (11) qui présente le réservoir de liquide (12), et
b. le distributeur dispose d'une tête de décharge (14) fixée à l'unité de réservoir (11) au moyen d'un dispositif de fixation (50), laquelle présente la chambre de prédosage (26), la chambre de dosage principale (32) et l'ouverture de décharge (38).

9. Distributeur (10) pour décharger des liquides selon la revendication 8, comprenant les caractéristiques supplémentaires suivantes :
a. la tête de décharge (14) présente une unité d'adaptateur (16) et une unité de décharge (18), et
b. l'unité d'adaptateur (16) présente le dispositif de fixation (50) pour la fixation à l'unité de réservoir (11), et
c. l'unité de décharge (18) présente l'ouverture de décharge (38), et
d. l'unité d'adaptateur (16) et l'unité de décharge (18) sont notamment connectées l'une à l'autre par une connexion enfichable de fixation à engagement par force.

10. Distributeur (10) pour décharger des liquides selon l'une quelconque des revendications 8 et 9, comprenant les caractéristiques supplémentaires suivantes :
a. la chambre de prédosage (26) et/ou la chambre de dosage principale (32) sont limitées par deux composants de chambres communs (56, 58 ; 57, 59) qui sont connectés l'un à l'autre dans une direction axiale,
de préférence comprenant au moins l'une des caractéristiques supplémentaires suivantes :
b. les composants de chambre (56, 58 ; 57, 59) comprennent chacun une portion extérieure cylindrique, les deux portions extérieures étant poussées l'une dans l'autre en se chevauchant, et/ou
c. au moins l'un des composants de chambre (56, 58 ; 57, 59) comprend une portion extérieure cylindrique, celle-ci étant entourée par un boîtier de base (70) de la tête de décharge (14) de telle sorte qu'un élargissement de la portion extérieure soit limité, afin d'agir à l'encontre d'une séparation des composants de chambre.

11. Distributeur (10) pour décharger des liquides selon l'une quelconque des revendications précédentes, comprenant les caractéristiques supplémentaires suivantes :
a. la tête de décharge (14) dispose d'un boîtier de base (70) qui est connecté fixement au réservoir de liquide (12) par le biais du dispositif de fixation, et
b. la tête de décharge (14) dispose d'une unité d'actionnement (72) déplaçable linéairement par rapport au boîtier de base (70), laquelle comprend la manette d'actionnement (42), et
c. la tête de décharge (14) dispose d'une unité de chambre (74) déplaçable linéairement par rapport au boîtier de base (70) et à l'unité d'actionnement (72), laquelle forme la paroi extérieure de la chambre de prédosage et/ou de la chambre de dosage principale.

12. Distributeur (10) pour décharger des liquides selon l'une quelconque des revendications précédentes, comprenant la caractéristique supplémentaire suivante :
a. une soupape de décharge (36) est prévue dans le canal de décharge (34), laquelle s'ouvre en fonction de la pression du liquide affluant depuis la chambre de dosage principale.

13. Distributeur (10) pour décharger des liquides selon l'une quelconque des revendications précédentes, comprenant au moins l'une des caractéristiques supplémentaires suivantes :
a. le réservoir de liquide est rempli avec un liquide qui est l'un des liquides suivants : un liquide alimentaire, tel que des huiles alimentaires, de la mayonnaise ou du ketchup, un liquide technique tel que de la peinture ou des huiles de machine, un liquide pharmaceutique ou un liquide cosmétique, et/ou
b. le réservoir de liquide présente un volume allant jusqu'à 1000 ml, préférablement allant jusqu'à 500 ml, notamment préférablement allant jusqu'à 250 ml, et/ou
c. un volume de décharge du dispositif de dosage (20), qui est défini par la capacité de déplacement de la paroi déplaçable (32A) de la chambre de dosage principale (32), est compris entre 0,01 ml et 5 ml, en particulier entre 1 ml et 2 ml et/ou
d. la soupape intermédiaire (30) comprend un corps de soupape (30B) qui peut être déplacé dans un espace de soupape, le siège de soupape étant prévu du côté de l'entrée dans l'espace de soupape et l'espace de soupape pouvant être réduit au moyen de la manette d'actionnement (42) et/ou
e. les parois déplaçables (26A, 30A), en particulier en tant que partie de l'unité de paroi (48), peuvent être déplacées dans la direction de déplacement de la manette d'actionnement.

14. Procédé de fonctionnement utilisant un distributeur (10) pour décharger des liquides selon l'une quelconque des revendications précédentes, comprenant les étapes suivantes :
a. la chambre de prédosage (26) est remplie à travers le canal d'alimentation (22) avec un liquide sollicité en pression provenant du réservoir de liquide (12), ladite chambre de prédosage adoptant en l'occurrence son volume maximal, par déplacement sous pression de la paroi déplaçable (26A) de la chambre de prédosage (26), et la chambre de dosage principale (32) adoptant, du fait du déplacement en résultant de la paroi déplaçable (32A), son volume minimal, et
b. le liquide sortant de la chambre de prédosage (26) est refoulé dans la chambre de dosage principale (32) par le canal intermédiaire (28) par déplacement de la paroi déplaçable (26A) jusqu'à ce que la chambre de dosage principale (32) adopte son volume maximal et que la chambre de prédosage (26) adopte son volume minimal, et
c. au cours d'un nouveau remplissage de la chambre de prédosage (26) à travers le canal d'alimentation (22) avec un liquide sollicité en pression provenant du réservoir de liquide (12), les parois déplaçables (26A, 32A) de la chambre de prédosage (26) et de la chambre de dosage principale (32) sont à nouveau déplacées de telle sorte que le volume de la chambre de dosage principale (32) soit réduit et que le liquide sortant de la chambre de dosage principale (32) soit déchargé à travers l'ouverture de décharge (38).
